# EUROPEAN PATENT APPLICATION

(11) **EP 4 625 149 A1**
(43) Date of publication of application: **01.10.2025**
(21) Application number: 24167918.2
(22) Date of filing: 29.03.2024
(51) Int. Cl.: G06F 8/33, G06F 9/52, G06F 8/34, G06F 9/451

(54) **SYSTEMS AND METHOD FOR MANAGING CO-DEVELOPMENT OF APPLICATIONS**

(30) Priority: 27.03.2024 US 202418618286
(71) Applicant: Infosys Limited, 560-100 Bangalore (IN)
(72) Inventor: WESTON-LEWIS, Sebastian, London (GB); SRIVASTAVA, Snehil, Bangalore (IN)
(74) Representative: Finnegan Europe LLP

(57) **Abstract**

This disclosure relates to method and system for managing co-development of applications. The method includes receiving a request corresponding to a first user to edit a Graphical User Interface (GUI) of a development environment for an application. The application includes a plurality of pages, which includes a plurality of blocks. The method includes retrieving lock data of each of the plurality of blocks and a first set of user privileges associated with the first user. The lock data of each block includes a lock status. The method includes determining editability of the first user to each of the plurality of blocks based on the lock data of each of the plurality of blocks and the first set of user privileges. The method includes rendering the GUI on a first user device associated with the first user based on the determined editability.

## Description

### Technical Field

This disclosure relates generally to application development, and more particularly to system and method for managing co-development of applications.

### Background

Application development is a collaborative process, often involving multiple users working concurrently on different parts of an application. In the present state of art, the users face challenges while codeveloping applications concurrently. A block of code may be used at different pages in the application. Multiple users codeveloping the application concurrently, may edit different instances of the same block of code present on different pages of the application. This may create multiple versions of the same block of code at different instances, which may be undesirable. It may lead to issues such as overwriting and inconsistency while codeveloping the application concurrently.

Conventionally, application development may be done offline in an asynchronous manner. However, merging the changes made by each user may become cumbersome and may be prone to errors. Currently, there are no solutions to address these issues.

Therefore, there is a need in the present state of the art for techniques to address the shortcomings of the conventional methods of managing co-development of applications.

### SUMMARY

In one embodiment, a method for managing co-development of applications is disclosed. In one example, the method may include receiving a request corresponding to a first user to edit a Graphical User Interface (GUI) of a development environment for an application. The application may include a plurality of pages. The plurality of pages may include a plurality of blocks. The method may further include retrieving lock data of each of the plurality of blocks and a first set of user privileges associated with the first user. The lock data of each block may include a lock status. The lock status may be indicative of whether a corresponding block is in a locked condition or an unlocked condition. The method may further include determining editability of the first user to each of the plurality of blocks based on the lock data of each of the plurality of blocks and the first set of user privileges. The method may further include rendering the GUI on a first user device associated with the first user based on the editability.

In one embodiment, a system for managing co-development of applications is disclosed. In one example, the system may include a processing circuitry and a computer-readable medium communicatively coupled to the processing circuitry. The computer-readable medium may store processor-executable instructions, which, on execution, may cause the processing circuitry to receive a request corresponding to a first user to access a Graphical User Interface (GUI) of a development environment for an application. The application may include a plurality of pages. The plurality of pages may include a plurality of blocks. The processor-executable instructions, on execution, may further cause the processing circuitry to retrieve lock data of each of the plurality of blocks and a first set of user privileges associated with the first user. The lock data of each block may include a lock status. The lock status is indicative of whether a corresponding block is in a locked condition or an unlocked condition. The processor-executable instructions, on execution, may further cause the processing circuitry to determine editability of the first user to each of the plurality of blocks based on the lock data of each of the plurality of blocks and the first set of user privileges. The processor-executable instructions, on execution, may further cause the processing circuitry to render the GUI on a first user device associated with the first user based on the editability.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, explain the disclosed principles.
**FIG. 1** is a block diagram of an environment for managing co-development of applications, in accordance with an exemplary embodiment of the present disclosure;
**FIG. 2** is a block diagram of a system for managing co-development of applications, in accordance with an exemplary embodiment of the present disclosure;
**FIG. 3** is a flow diagram of an exemplary process for managing co-development of applications, in accordance with an exemplary embodiment of the present disclosure;
FIGS. 4A-B illustrate a flow diagram of a detailed exemplary process for managing co-development of applications, in accordance with an exemplary embodiment of the present disclosure;
**FIG. 5** is a flow diagram of an exemplary process for managing lock status of blocks in a Graphical User Interface (GUI), in accordance with an exemplary embodiment of the present disclosure;
**FIG. 6** is a flow diagram of an exemplary process for identifying active users and inactive users corresponding to blocks in a GUI, in accordance with an exemplary embodiment of the present disclosure;
**FIG. 7** is a flow diagram of an exemplary process for managing lock status of blocks in a GUI, in accordance with an exemplary embodiment of the present disclosure;
FIGS. 8A-B illustrate a flow diagram of a detailed exemplary process for managing lock status of blocks in a GUI, in accordance with an exemplary embodiment of the present disclosure;
FIGS. 9A-I illustrate GUIs rendered on user devices of users when a block is edited by one of the users, in accordance with an exemplary embodiment of the present disclosure;
FIGS. 10A-I illustrate GUIs rendered on user devices of users when different blocks are edited concurrently by two of the users, in accordance with an exemplary embodiment of the present disclosure;
FIGS. 11A-I illustrate GUIs rendered on user devices of users when a nested block is edited by one of the users, in accordance with an exemplary embodiment of the present disclosure;
FIGS. 12A-O illustrate GUIs rendered on user devices of users when different nested blocks are edited concurrently by two of the users, in accordance with an exemplary embodiment of the present disclosure; and
**FIG. 13** is a block diagram of a system architecture of a computer system for managing co-development of applications, in accordance with an exemplary embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

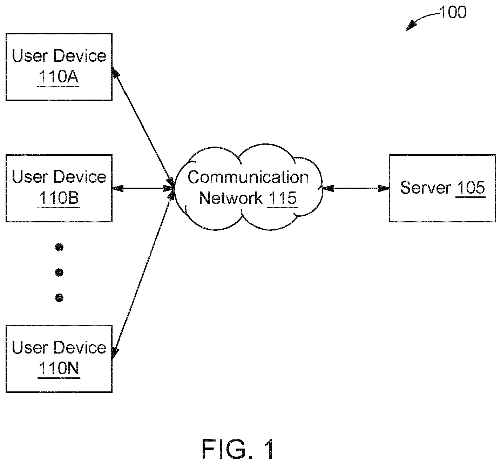

**FIG. 1** is a block diagram that illustrates an environment 100 for managing co-development of applications, in accordance with an exemplary embodiment of the present disclosure.

The environment 100 may include a server 105 and a plurality of user devices (for example, a user device 110A, a user device 110B, ..., a user device 110N) associated with a plurality of users. The user device 110A, the user device 110B, ..., the user device 110N may be associated with a first user, a second user, ..., an Nth user, respectively. The user device 110A, the user device 110B, ..., the user device 110N are collectively referred to as "a plurality of user devices 110" from hereon. The server 105 and the plurality of user devices 110 are configured to communicate with each other via a communication network 115. Examples of the communication network 115 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof. The server 105 and the plurality of user devices 110 need not be located in proximity to each other.

Each of the plurality of user devices 110 may provide an input to the server 105 through the communication network 115 via a wired connection or a wireless connection, or a combination thereof. The wired connection between each of the plurality of user devices 110 and the server 105 may include, but is not limited to, B-ISDN, DSL, ADSL, ADSL+2, SDSL, VDSL, and cable. The wireless connection between each of the plurality of user devices 110 and the server 105 may include, but is not limited to, wireless LAN, wireless MAN, wireless PAN, and wireless WAN.

Elements of the environment 100 may be implemented within one or more application development teams in an enterprise. An application development team may include a plurality of users involved in development, testing, and/or debugging of an application through the corresponding plurality of user devices 110. By way of an example, the user may be an application developer, an application tester, a product manager, a senior executive, a chief executive, or an owner of the enterprise. The plurality of user devices 110 may include, but may not be limited to, tablets, smartphones, laptops, desktops, or any other computing devices. Each of the plurality of user devices 110 may include one or more input devices, such as a keyboard, a mouse, and the like. Also, each of the plurality of user devices 110 may include one or more output devices, such as a digital screen, analog screen, speakers, printer, etc. Each of the plurality of user devices 110 may receive an input from the user in a computer-readable format such as, but not limited to, a text format, a video format, or an image format. Each of the plurality of user devices 110 may provide an output to the user in computer-readable formats such as, but not limited to, a text format, a video format, or an image format.

In some embodiments, the server 105 may be a centralized server or a group of decentralized servers connected with each other through a wired or a wireless connection. For ease of explanation, the server 105 is shown as a single entity in FIG. 1. The server 105 may be owned and administrated by the enterprise.

The server 105 may implement a development environment for the application The development environment may be a No-Code Development Platforms (NCDPs) and Low Code Development Platforms. The plurality of users in the application development team may concurrently edit the development environment and perform various delegated tasks for application development. The development environment may be a Graphical User Interface (GUI) rendered on the plurality of user devices 110 through the server 105. The GUI may include a plurality of blocks. A block may be a GUI element of the application. Such blocks are common in NCDPs and LCDPs. In an embodiment, the block may be a code block. The development environment may be editable by the plurality of users upon providing valid user login credentials.

Conventionally, application development is done either offline by individual members of the application development team and later, modifications to the code of the application are merged. However, this is a tedious task and is prone to errors. More recently, to enable easier collaboration, tools have been developed to allow multiple users to collaboratively work on a centrally stored application code such as through GitHub. However, such tools fail to address the issues associated with multiple users concurrently working on the same block. Such issues may lead to an erroneous merger of code or loss of data. Development experience with such tools is not synchronized for the plurality of users.

To address the above-mentioned limitations, the server 105 may manage a synchronized co-development of applications. It should be noted that an application may include a plurality of pages. Each of the plurality of pages may include a plurality of blocks (such as GUI elements of the application). There may be one or more instances of a block in a page. For example, a logo of a company may be present in a header section and a footer section of a homepage of a company website. Additionally, one or more of the plurality of pages may include an instance of the block. For example, the logo of the company may be present in a header section of multiples pages in the application. The application may be a software application or a web application. Further, a block may be nested within another block or a plurality of blocks. Such nesting of blocks may be possible for one or more blocks in one or more pages.

All instances of a block in the plurality of pages may be automatically locked for other users when a user is editing the block. This prevents multiple users to work on the same block concurrently. This also makes other users aware that a user is currently working on the block.

By way of an example, the server 105 may receive a request from the user device 110A and the user device 110B for editing the GUI of the development environment. The server 105 may then retrieve lock data of each of the plurality of blocks and a set of user privileges associated with the first user and the second user. The lock data of each block may include a lock status. The lock status is indicative of whether a corresponding block is in a locked condition or an unlocked condition. In some embodiments, a default lock status for each of the plurality of blocks may be preconfigured. In an embodiment, the default lock status for each block of the plurality of blocks may be indicative of the block being in an unlocked condition. The lock data of each block may further include block activity data. The block activity data may be indicative of a set of active users editing one or more blocks of the plurality of blocks. An active user for a block may be a user for whom the block is in the locked condition (i.e., the block is editable by the user and non-editable by remaining of the plurality of users) and who is actively engaging with the block (user engagement corresponding to the block is detected via ping messages from an associated user device).

In an embodiment, the set of user privileges may be selected from editing rights, viewing rights, or no rights. The editing rights of a block may correspond to the rights given to a user to view and edit. i.e., delete, modify, or add content of a block. The viewing rights of a block may correspond to the rights given to a user to only view the content of the block. The viewing rights of the block refrain a user from editing the contents of the block. No rights indicate that a user cannot view or edit the contents of a block. The set of user privileges may be different for different users. For example, a set of user privileges for the first user may include editing rights for a block while a set of user privileges for the second user may include viewing rights for the block. In some embodiments, a user may be provided with editing rights for a first block, viewing rights for a second block, and no rights for a third block.

Conventionally, when multiple instances of a block are present in more than one pages in an application, there may be chances of erroneous editing or data loss For example, if a first user is editing a first instance of a block on a first page and the second user is editing a second instance of the same block on a second page (from the one or more of the plurality of pages), the second user may overwrite, modify or delete the contents in the second instance of the block without being aware of the changes made by the first user to the first instance of the same block. To prevent such scenarios, the present disclosure explains a global store lock service.

When a user accesses the GUI of the development environment of the application, the user may be automatically subscribed to a global store lock service. The global store lock service may have access to the lock statuses of each block of an application. The global store lock service may periodically update lock statuses of the plurality of blocks through an Application Programming Interface (API). The API may facilitate retrieval of the lock data from one or more databases.

Further, the server 105 may determine editability of a user to each of the plurality of blocks based on the lock data of each of the plurality of blocks and the set of user privileges. The editability of a block by a user is indicative of whether a block is editable by the user or non-editable by the user.

The server 105 may render the GUI on the user device 110A and the user device 110B based on the determined editability. Editability of the first user and the second user to each block in the GUI may be based on the lock status of the block (i.e., whether the block is in a locked condition or an unlocked condition) and the set of user privileges associated with the first user and the second user (i.e., whether the user has rights to edit the block).

Further, the server 105 may extract a contextual map from a project repository. The project repository may include information about one or more projects. Each of the one or more projects may include files corresponding to an application. Each of the files may include a plurality of pages, and each page may, in turn, include a plurality of blocks. Multiple instances of one or more blocks may be present in one or more of the plurality of pages. The contextual map may include information about a structure of a proj ect/file extracted from the project repository. The contextual map may include information, such as connections among the plurality of blocks (e.g., location of the plurality of blocks inside a page or plurality of pages, nesting of the plurality of blocks, etc.). Thus, the server 105 may identify locations of all the instances of a block within the plurality of pages and may lock each instance of the block in each of the identified locations for a user to prevent overwriting the data in that block by other users.

For example, the first user may provide a selection command to edit the block. A locking request for the first user may be generated by the server 105 based on the selection command. The locking request may be generated to modify the lock status of the block from indicating that the block is in the unlocked condition to indicating that the block is in the locked condition. The locking request for the first user is generated to make the block editable by the first user and non-editable by remaining of the plurality of users. The locking request may be used to authenticate whether the block can be rendered as editable on the user device 110A. The locking request may then be validated by the API. The validation may include sending the locking request to the global store lock service. The global store lock service may be included in the server 105. The global store lock service may then check the one or more databases through the API for the lock status of the block. The one or more databases may store information related to lock statuses of the plurality of blocks in the application. If the lock status of the block indicates that the block is in the unlocked condition, the global store lock service may successfully validate the locking request.

Upon unsuccessful validation, an error message may be displayed on the user device 110A. For example, the error message may be "You do not have the user privileges to edit the selected content" or "The selected content is locked by another user". Upon successfully validating the locking request, the global store lock service may modify the lock status of the block to indicate that the block is in the locked condition and cannot be edited by other users except by the first user. The first user may be identified as an active user of the block. Therefore, for the first user, the block may remain in the unlocked condition and for remaining of the plurality of users, the block may remain in the locked condition. The block may be rendered as editable on the user device 110A associated with the first user. On the other hand, the block may be rendered as non-editable on the user device 110B associated with the second user. In an embodiment, the block may be rendered as an obfuscated block on the user device 110B. Alternatively, the block may be rendered as a non-selectable object on the user device 110B.

The first user may perform operations (i.e., editing, modifying, adding, or deleting contents) on the block. The changes made to a first instance of the block by the first user may be sent to the server 105. The server 105 may automatically synchronize the changes to the other instances of the block in the application.

While the first user may perform operations on the block using the first user device 110A, the first user device 110A may send ping messages at regular intervals to the user 105. Block activity of the first user may be monitored through exchange of ping messages between the user device 110A and the server 105. To monitor the block activity, a timer with a first predefined expiration time period (e.g., 10 seconds, 1 minute, 5 minutes, etc.) may be initiated by the server 105. The server 105 may detect an engagement of the first user with the block based on ping messages received from the user device 110A.

If the engagement is detected within the first predefined expiration time period, the first user may be identified as an active user corresponding to the block. The timer may be reset and reinitiated. However, if the engagement is not detected (i.e., at least one ping message is not received) within the first predefined expiration time period, the first user may be identified as an inactive user corresponding to the block. The inactive user for a block may be a user corresponding to whom the block may be in the locked condition (i.e., editable by the user and non-editable by remaining of the plurality of users) and who has not actively engaged with the block for the first predefined expiration time period (i.e., at least one ping message is not received within the first predefined expiration time period).

Further, when the first user is classified as the inactive user corresponding to the first block, the server 105 may send a first notification to the user device 110A indicating an expiration of the first predefined expiration time period. If the server 105 receives a response from the first user via the user device 110A within a second predefined expiration time (e.g., 10 seconds, 1 minute, 5 minutes, etc.), the user may be identified as the active user again and the lock status of the block is maintained to indicate that the block is in the locked condition. If the server 105 does not receive a response from the user device 110A associated with the first user within the second predefined expiration time, the lock status of the block is modified to indicate that the block is in the unlocked condition and remaining of the plurality of users (including the first user) may also request the server to render the block as editable. Thus, there is a double layer of verification before confirming that a previously active user is now an inactive user.

When the first user finishes editing the block while maintaining activity by engaging with the block, the first user may deselect the block and a request to modify the lock status may be sent to the server 105 from the first user device 110A to indicate that the block is in the unlocked condition. The global store lock service may modify the lock status of the block to indicate that the block is in the unlocked condition and the block may be rendered as editable by the plurality of users on respective user devices.

In an exemplary scenario, the GUI may include a first page and a second page. The first page may include a first block and a second block. The first block may be nested within the second block. The second page may include the first block and a third block. The first block may be nested within the third block. The first user and the second user may be concurrently active on the first page through the user device 110A and the user device 110B, respectively. Additionally, the third user may also be concurrently active on the second page through the user device 110N.

The first block may be rendered as editable on the user device 110A by the first user when the first block is in the locked condition initiated by the first user. Additionally, the first block may be rendered as non-editable on each of the user device 110B and the user device 110N.

The second block and the third block may be rendered as editable on each of the user device 110A, the user device 110B, and the user device 110N when the second block and the third block are in the unlocked condition. Thus, each nested block may be individually selectable by the user. If the first user operates on a second block, the first block may be rendered as editable by the second user even if the first block is nested within the second block.

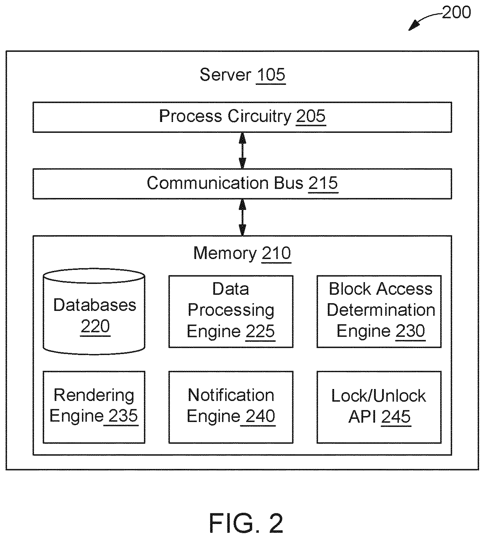

**FIG. 2** is a block diagram that illustrates a system 200 for managing co-development of applications, in accordance with an exemplary embodiment of the present disclosure. FIG. 2 is explained in conjunction with elements from FIG. 1. The system 200 may include the server 105. In an embodiment, the server 105 may include a processing circuitry 205 and a memory 210 communicatively coupled to the processing circuitry 205 via a communication bus 215. The memory 210 may store processor instructions. The processor instructions, when executed by the processing circuitry 205, may cause the processing circuitry 205 to implement one or more embodiments of the present disclosure such as, but not limited to, determining a lock status of a block and rendering the block on a user device as editable based on the lock status and a set of user privileges. Further, the memory 210 of the server 105 may include one or more databases 220, a data processing engine 225, a block access determination engine 230, a rendering engine 235, a notification engine 240, and a lock/unlock API 245.

The data processing engine 225 may receive a request corresponding to a first user from the user device 110A to edit a GUI of a development environment for an application. The application may include a plurality of pages. The plurality of pages may include a plurality of blocks. The plurality of blocks may be GUI elements, code blocks, or a combination thereof.

The data processing engine 225 may retrieve lock data of each of the plurality of blocks and a first set of user privileges associated with the first user, from the one or more databases 220. The lock data of each block may include the lock status. In an embodiment, the lock data of each block may further include block activity data. The block activity data is indicative of a set of active users editing one or more blocks of the plurality of blocks. In some embodiments, there may be separate databases for storing each of the lock data and set of user privileges.

For example, a page of the GUI may include 5 blocks - 3 of the blocks may not be edited by anyone (i.e., are in unlocked condition), 1 block may be edited by a second user (using the user device 110B), and 1 block may be edited by a third user (using the user device 110N). The lock status of the 3 blocks may be indicative that the 3 blocks are in the unlocked condition. The lock statuses of the blocks edited by the second user and the third user may be indicative that said blocks are in the locked condition.

The block access determination engine 230 may determine editability of the first user to each of the plurality of blocks based on the lock data of the plurality of blocks and the first set of user privileges corresponding to the first user. It should be noted that the editability may be indicative of whether each of the plurality of blocks is editable by the first user or non-editable by the first user.

The rendering engine 235 may render the GUI on the user device 110A based on the determined editability. Editability of the first user to each block in the GUI may be based on the lock status of the block and the first set of user privileges associated with the first user. In continuation of the example above, the rendering engine 235 may render the blocks edited by the second user and the third user as non-editable on the user device 110A.

Further, the data processing engine 225 may receive a selection command, from the first user device associated with the first user, to edit a first block of the plurality of blocks in a first page of the plurality of pages. The lock status of the first block may be checked. If the lock status of the first block is indicative of the first block being in the unlocked condition, the block access determination engine 230 may generate a locking request based on the selection command for the first block. In some embodiments, if the lock status is indicative of the first block being in the unlocked condition, the first user may not be able to generate the selection command for the first block (i.e., the first block may be rendered as non-selectable on the user device 110A). The block access determination engine 230 may validate the locking request through a global store lock response service and the lock/unlock API 245. The lock/unlock API 245 may facilitate exchange of information related to lock status of the first block from the one or more databases 220 to the global store lock response service. The global store lock response service may receive the locking request and verify the locking request from the one or more databases 220 via the lock/unlock API 245.

Upon successfully validating, the block access determination engine 230 may modify the lock status of the first block to indicate that the first block is in the locked condition. The global store lock response service may update the databases 220 with the modified lock status of the first block via the lock/unlock API 245. Consequently, the block access determination engine 230 may identify the first user as an active user corresponding to the first block.

When the first user and a second user (using the user device 110B) are concurrently editing the development environment, the rendering engine 235 may then render the block as editable by the first user using the user device 110A and may render the block as non-editable by the second service using the user device 110B. The first user may then operate upon the first block without interruptions from remaining of a plurality of users concurrently editing the development environment.

After rendering the first block as editable to the first user, the block access determination engine 230 may monitor activity of the first user on the first block. In some embodiments, changes made by the first user to the first block may be periodically automatically saved. The block access determination engine 230 may detect an engagement of the first user with the first block through an exchange of ping messages between the user device 110A and the data processing engine 225. The block access determination engine 230 may classify the first user as one of an active user or an inactive user of the first block based on the detected engagement. For example, while the first user may be editing the first block on the first user device, the first user device may send ping messages to the server. Upon receiving the ping messages, the block access determination engine 230 may classify the first user as an active user of the first block. The block access determination engine 230 may initiate a timer based on the engagement of the first user. The timer may include a first predefined expiration time period (e.g., 10 seconds, 1 minute, 5 minutes, etc.).

The block access determination engine 230 may identify the first user as an active user corresponding to the first block when at least one ping message is received from the user device 110A within the first predefined expiration time period.

The block access determination engine 230 may identify the first user as the inactive user corresponding to the first block when at least one ping message is not received from the user device 110A within the first predefined expiration time period.

When the first user is classified as an inactive user corresponding to the first block, the notification engine 240 may send a first notification on the user device 110A indicating an expiration of the first predefined expiration time period. The first notification may be valid for a second predefined expiration time period (e.g., 30 seconds, 1 minute, 5 minutes, etc.).

If the data processing engine 225 receives, from the user device 110A, a response to the first notification within the second predefined expiration time period, the block access determination engine 230 may maintain the lock status of the first block to indicate that the first block is in the locked condition.

However, if the first user, using the user device 110A, fails to respond to the first notification within a second predefined expiration time period, the block access determination engine 230 may modify the lock status of the first block to indicate that the first block is in an unlocked condition. The first block may then be rendered as editable on the user device 110A as well as remaining of the plurality of user devices 110 (such as the user device 110B). In other words, the first block may be rendered as editable on each of the plurality of user devices 110. This prevents unnecessary and unintentional prevention of the editability of a block by a user. Optionally, the notification engine 240 may send a notification to the user device 110A corresponding to the modification of the lock status of the first block to indicate that the first block is in an unlocked condition. The notification may be, for example, "The first block is now unlocked".

In some embodiments, the notification engine 240 may send a notification to the user device 110A when there is a change in editability of each of the plurality of blocks in a page that is being accessed by the first user. For example, when the first block is in the locked condition corresponding to the second user (i.e., editable by the second user and non-editable by remaining of the plurality of users), the notification engine 240 may send a notification to the user device 110A that may state, for example, "The first block is locked by the second user" or "The first block is being edited by the second user". Later, when the first block is in the unlocked condition, the notification engine 240 may send a notification to the user device 110A that may state, for example, "The first block is now unlocked" or "The first block is now available for editing".

In an embodiment, the first block may be included in the first page and a second page of the plurality of pages. When the first block is in the locked condition and when the first user is the active user corresponding to the first block, the rendering engine 235 may render the first block in the first page and in the second page as editable by the first user device (e.g., the user device 110A) associated with the first user. The rendering engine 235 may render the first block in the first page and in the second page as non-editable by the second user device (e.g., the user device 110B) associated with the second user.

In some embodiments, one or more blocks of the plurality of blocks may be nestable within one or more of remaining of the plurality of blocks. In an embodiment, the first block may be nested within a second block in the first page and within a third block in a second page. The first user and the second user may be active on the first page via the first user device and the second user device, respectively, and a third user may be active on the second page via a third user device. The first block in the first page and in the second page may be rendered as editable on the first user device and may be rendered as non-editable on each of the second user device and the third user device, when the first block is in the locked condition initiated by the first user. Any changes made by the first user to the first block may be reflected on the first blocks in the first page and the second page despite of the first block being nested within the second block and the third block in the first and second pages respectively. Further, when the lock statuses of the second block and the third block are indicative of the second block and the third block being in the unlocked condition, the second block and the third block may be rendered as editable on each of the first user device, the second user device, and the third user device.

It should be noted that all such aforementioned engines 225 - 240 may be represented as a single module or a combination of different modules. Further, as will be appreciated by those skilled in the art, each of the engines 225 - 240 may reside, in whole or in parts, on one device or multiple devices in communication with each other. In some embodiments, each of the engines 225 - 240 may be implemented as dedicated hardware circuit comprising custom application-specific integrated circuit (ASIC) or gate arrays, off-the-shelf semiconductors such as logic chips, transistors, or other discrete components. Each of the engines 225 - 240 may also be implemented in a programmable hardware device such as a field programmable gate array (FPGA), programmable array logic, programmable logic device, and so forth. Alternatively, each of the engines 225 - 240 may be implemented in software for execution by various types of processors (e.g., the processing circuitry 205). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for managing co-development of applications. For example, the exemplary server 105 may manage co-development of applications by the processes discussed herein. In particular, as will be appreciated by those of ordinary skill in the art, control logic and/or automated routines for performing the techniques and steps described herein may be implemented by the server 105 either by hardware, software, or combinations of hardware and software. For example, suitable code may be accessed and executed by the processing circuitry 205 on the server 105 to perform some or all of the techniques described herein. Similarly, application specific integrated circuits (ASICs) configured to perform some, or all of the processes described herein may be included in the processing circuitry 205 on the server 105.

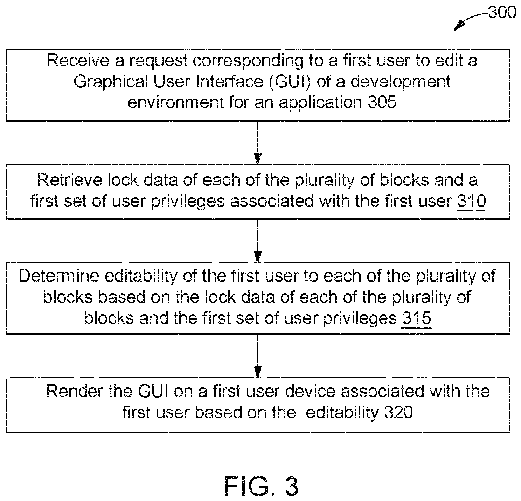

**FIG. 3** is a flow diagram that illustrates an exemplary process 300 for managing co-development of applications, in accordance with an exemplary embodiment of the present disclosure. FIG. 3 is explained in conjunction with elements from FIGS. 1 and 2. In an embodiment, the process 300 may be implemented by the server 105. The process 300 may include receiving, by the data processing engine 225, a request corresponding to a first user to edit a GUI of a development environment for an application, at step 305. The application may include a plurality of pages. The plurality of pages may include a plurality of blocks.

The process 300 may include retrieving, by the data processing engine 225, lock data of each of the plurality of blocks and a first set of user privileges associated with the first user, at step 310. The lock data of each block may include a lock status. The lock status may be indicative of whether a corresponding block is in a locked condition or an unlocked condition. The lock data may be retrieved from one or more databases (such as the databases 220).

The process 300 may include determining, by the block access determination engine 230, editability of the first user to each of the plurality of blocks based on the lock data of the plurality of blocks and the first set of user privileges, at step 315. It should be noted that the editability may be indicative of whether each of the plurality of blocks is editable by the first user or non-editable by the first user.

The process 300 may include rendering, by the rendering engine 235, the GUI on a first user device (for example, the user device 110A) associated with the first user based on the determined editability, at step 320. The determination of rights of the first user to edit each block in the GUI may be based on the lock status of the block and the first set of user privileges associated with the first user.

By way of an example, the first user may edit a first page of the GUI of the development environment through the user device 110A. The page includes 5 blocks - 3 of the blocks may be in the unlocked condition and 2 of the blocks may be in the locked condition (locked by other users). The data processing engine 225 may retrieve the lock data for each of the 5 blocks and the first set of user privileges from the databases 220. The block access determination engine 230 may determine the editability of the first user based on the lock status of the block and the first set of user privileges associated with the first user. The rendering engine 235 may render the first page on the user device 110A, where 3 of the blocks may be rendered as editable by the first user and 2 of the blocks may be rendered as non-editable by the first user.

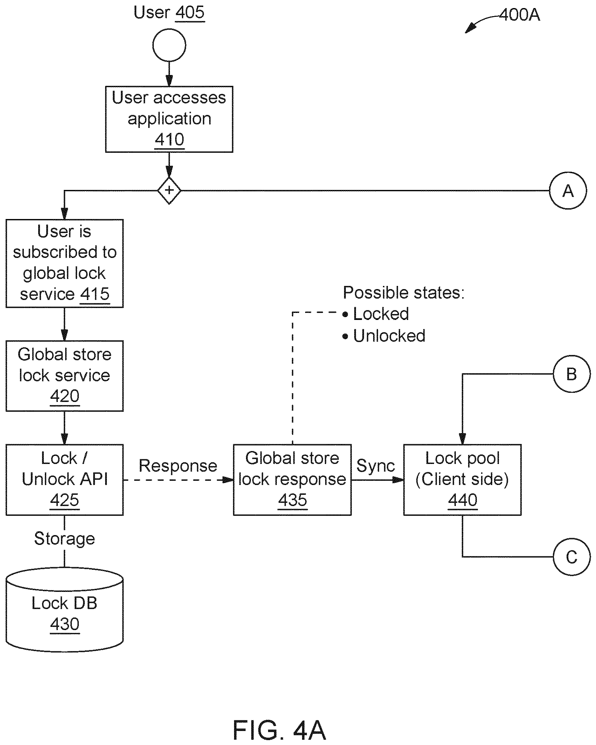

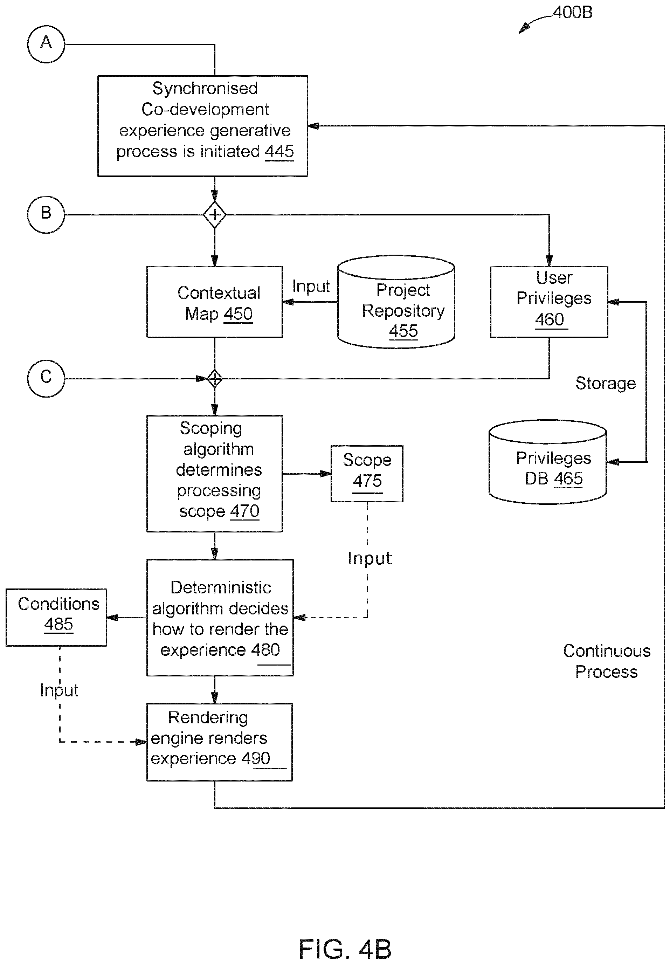

FIGS. 4A-B is a flow diagram that illustrates a detailed exemplary processes 400A and 400B for managing co-development of applications, in accordance with an exemplary embodiment of the present disclosure. FIG. 4 is explained in conjunction with elements from FIGS. 1, 2, and 3. In an embodiment, the processes 400A and 400B may be implemented in combination by the server 105. The process 400A may include accessing the application by a user 405, at step 410.

The process 400A may include subscribing, by the data processing engine 225, to a global store lock service 420 by the user 405, at step 415. The global store lock service 420 may access a lock database 430 via a lock/unlock API 425. The global store lock service 420 may update lock data corresponding to the user 405 and store the lock data in the lock database 430.

The process 400A may include sending a global store lock response 435 to a lock pool 440 via the lock/unlock API 425. The response may include a lock status of each of the plurality of blocks of the plurality of pages of the application. The lock status may be indicative of whether a corresponding block is in a locked condition or an unlocked condition.

At step 445, the process 400B may include initiating, by the data processing engine 225, a synchronized co-development experience generation process. The synchronized co-development experience generation process refers to providing a collaborative development environment of the application for a plurality of concurrently active users, wherein if a user wants to edit a part of the application, the user is subscribed to a global lock store service and that part of the application is only editable by the user and is not editable by other users at the same time. Thus, there is no overwriting or interruption caused to the user by another user trying to edit the same part of the application. The synchronized co-development experience ensures that even if there are multiple instances of a block on multiple pages of the application, if a user is editing one instance of the block, other instances of the same block are also prevented from being edited by other users at the same time.

Upon initiation, the data processing engine 225 may access the lock pool 440, a contextual map 450 through a project repository 455, and a set of user privileges 460 through a privileges database 465. The project repository 455 may include information about one or more projects. Each of the one or more projects may include files corresponding to an application. Each of the files may include a plurality of pages, and each page may, in turn, include a plurality of blocks. Some of the plurality of blocks may be present in one or more of the plurality of pages. The contextual map 450 may include information about a structure of a project/file extracted from the project repository 455. The contextual map 450 may include information, such as related to connections among the plurality of blocks (e.g., location of the plurality of blocks inside a page or plurality of pages, nesting of the plurality of blocks, etc.). For example, for an exemplary page with 3 blocks, the contextual map 450 may indicate that the page includes the 3 blocks arranged in an order - a sample block A, a sample block B, and a sample block C. Further, the contextual map 450 may provide respective locations of the sample block A, the sample block B, and the sample block C on the page.

At step 470, the process 400B may include determining, by the block access determination engine 230, processing scope 475 using a scoping algorithm. The scoping algorithm may be a Machine Learning (ML) algorithm that may determine the processing scope 475 using the lock pool 440, the contextual map 450, and the set of user privileges 460 as inputs. The processing scope 475 may be an optimal dataset determined by the scoping algorithm upon which further steps may be performed to render the synchronized co-development experience to the user 405. By way of an example, the processing scope 475 may include a plurality of blocks in a page that is being accessed by the user 405.

At step 480, the process 400B may include determining, by the block access determination engine 230, rendering of the synchronized co-development experience using a deterministic algorithm to obtain a set of predefined conditions 485 (or the predefined criteria). The deterministic algorithm may be a rule-based algorithm that may be used to determine the set of predefined conditions 485 based on the processing scope 475 as an input and a set of predefined rules. For example, for each block of the plurality of blocks in the page accessed by the user 405, the deterministic algorithm may determine whether the block is editable by the user 405 or non-editable by the user 405.

At step 490, the process 400B may include rendering, by the rendering engine 235, the synchronized co-development experience based on the set of predefined conditions 485. The synchronized co-development experience may be provided to the user 405. The synchronized co-development experience and rendering thereof is explained in detail in conjunction with FIGS. 1 and 2.

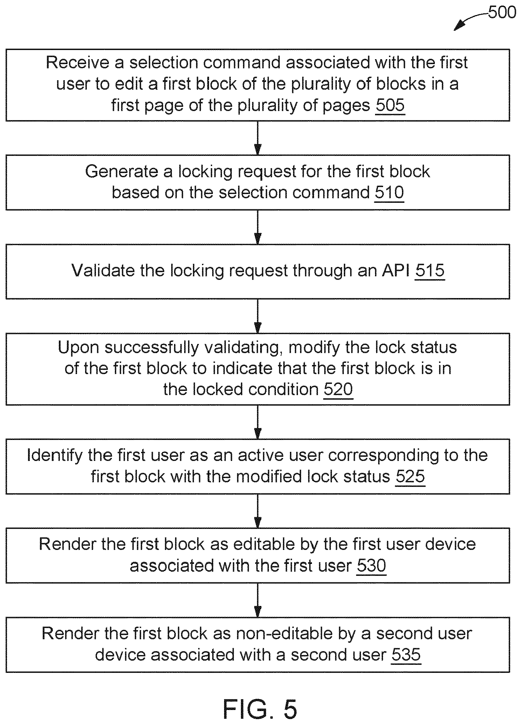

**FIG. 5** is a flow diagram that illustrates an exemplary process 500 for managing lock status of blocks in a GUI, in accordance with an exemplary embodiment of the present disclosure. FIG. 5 is explained in conjunction with elements from FIGS. 1, 2, 3 and 4. In an embodiment, the process 500 may be implemented by the server 105. It should be noted that the lock data of each block may further include block activity data. The block activity data is indicative of a set of active users editing one or more blocks of the plurality of blocks. The process 500 may include receiving, by the block access determination engine 230, a selection command associated with the first user to edit a first block of the plurality of blocks in a first page of the plurality of pages, at step 505. The lock status of the block is indicative of the block being in the unlocked condition.

The process 500 may include generating, by the block access determination engine 230, a locking request based on the selection command, at step 510.

The process 500 may include validating, by the block access determination engine 230, the locking request through an API (such as the lock/unlock API 245), at step 515.

Upon successfully validating, the process 500 may include modifying, by the block access determination engine 230, the lock status of the first block to indicate that the first block is in the locked condition, at step 520.

The process 500 may include identifying, by the block access determination engine 230, the first user as an active user corresponding to the first block with the modified lock status, at step 525.

The process 500 may include rendering, by the rendering engine 235, the first block as editable by the first user device associated with the first user, at step 530.

When a second user and the first user are concurrently editing the development environment, the process 500 may include rendering, by the rendering engine 235, the first block as non-editable by a second user device associated with the second user, at step 535.

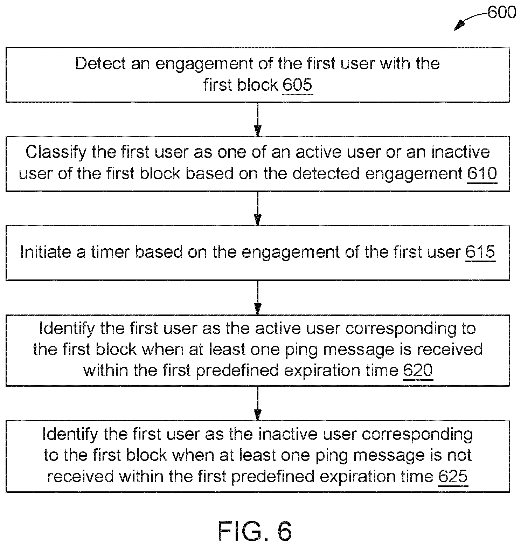

**FIG. 6** is a flow diagram that illustrates an exemplary process 600 for identifying active users and inactive users corresponding to blocks in a GUI, in accordance with an exemplary embodiment of the present disclosure. FIG. 6 is explained in conjunction with elements from FIGS. 1, 2, 3, 4, and 5. In an embodiment, the process 600 may be implemented by the server 105. The process 600 may include detecting, by the block access determination engine 230, an engagement of the first user with the first block, at step 605. In an embodiment, the engagement may be detected based on ping messages received from the first user device (e.g., the user device 110A) associated with the first user when the first user is editing the first block on the first user device.

The process 600 may include classifying, by the block access determination engine 230, the first user as one of an active user or an inactive user of the first block based on the detected engagement, at step 610. When an engagement is detected from the first user device, the first user is classified as the active user. When an engagement is not detected from the first user device, the first user is classified as the inactive user.

The process 600 may include initiating, by the block access determination engine 230, a timer based on the engagement of the first user. The timer may include a first predefined expiration time period, at step 615. The first block is rendered as editable by the active user during the first predefined expiration time period. The engagement of the first user may be monitored within the first predefined expiration time period.

The process 600 may include identifying, by the block access determination engine 230, the first user as the active user corresponding to the first block when at least one ping message is received from the first user device within the first predefined expiration time period, at step 620. For example, if the first user is editing the first block using the user device 110A, at least one ping message may be sent from the user device 110A to the server 105. However, if the first user has access to the first block but is not editing the first block, no ping message may be sent from the user device 110A to the server 105. Thus, reception of the at least one ping message from the first user device may indicate the engagement of the first user with the first block.

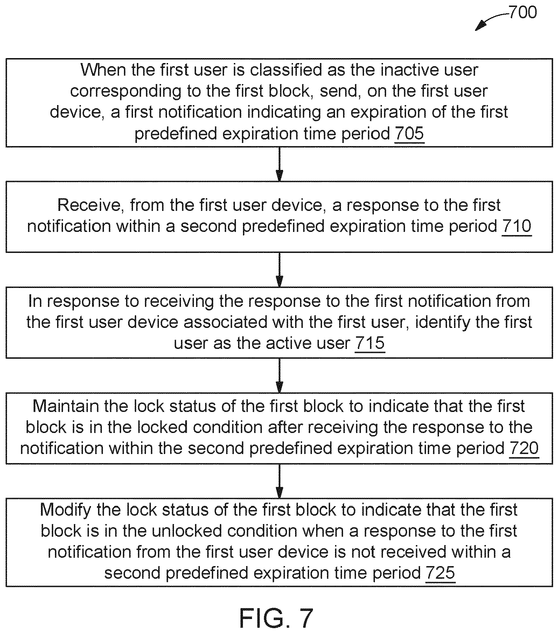

The process 600 may include identifying, by the block access determination engine 230, the first user as the inactive user corresponding to the first block when at least one ping message is not received from the first user device within the first predefined expiration time period, at step 625. Further steps upon identifying the first user as an inactive user are explained in detail in conjunction with FIG. 7.

**FIG. 7** is a flow diagram that illustrates an exemplary process 700 for managing lock status of blocks in a GUI, in accordance with an exemplary embodiment of the present disclosure. FIG. 7 is explained in conjunction with elements from FIGS. 1, 2, 3, 4, 5, and 6. The process 700 may be implemented in continuation to the process 600. In an embodiment, the process 700 may be implemented by the server 105. When the first user is identified as the inactive user corresponding to the first block as described above at step 625, the process 700 may include sending, by the notification engine 240, on the first user device, a first notification indicating an expiration of the first predefined expiration time period, at step 705.

The process 700 may include receiving, by the data processing engine 225 from the first user device, a response to the first notification within a second predefined expiration time period, at step 710. In response to receiving the response to the first notification from the first user device associated with the first user, the process 700 may include identifying the first user as the active user.

The process 700 may include, in response to receiving the response to the first notification from the first user device associated with the first user, identifying, by the block access determination engine 230, the first user as the active user, at step 715.

The process 700 may include maintaining, by the block access determination engine 230, the lock status of the first block to indicate that the first block is in the locked condition after receiving the response to the first notification within the second predefined expiration time period, at step 720.

The process 700 may include modifying, by the block access determination engine 230, the lock status of the first block to indicate that the first block is in the unlocked condition and can be edited by other concurrent users when a response to the first notification from the first user device associated with the first user is not received within a second predefined expiration time period, at step 725.

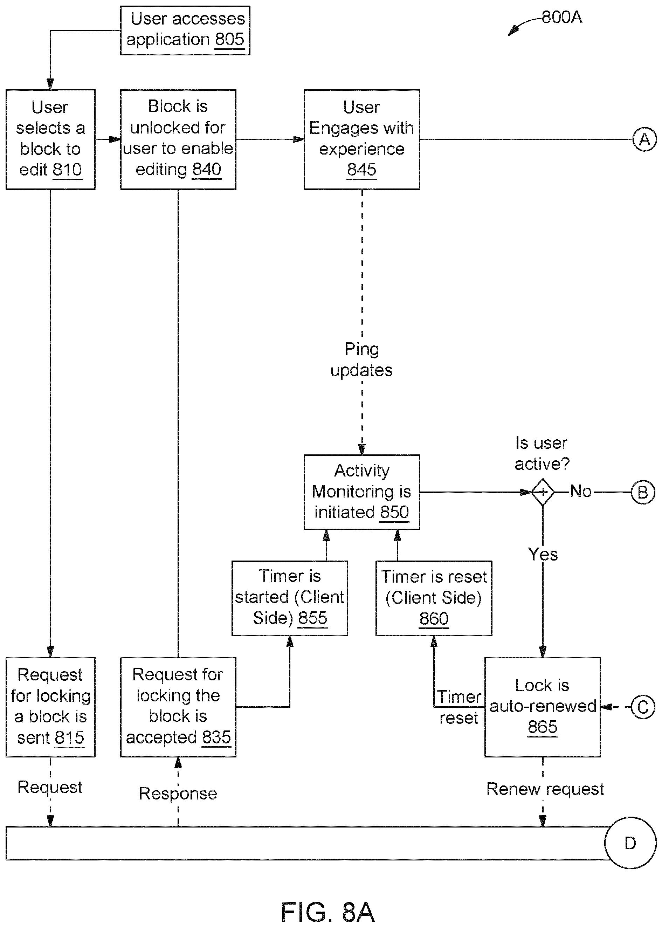

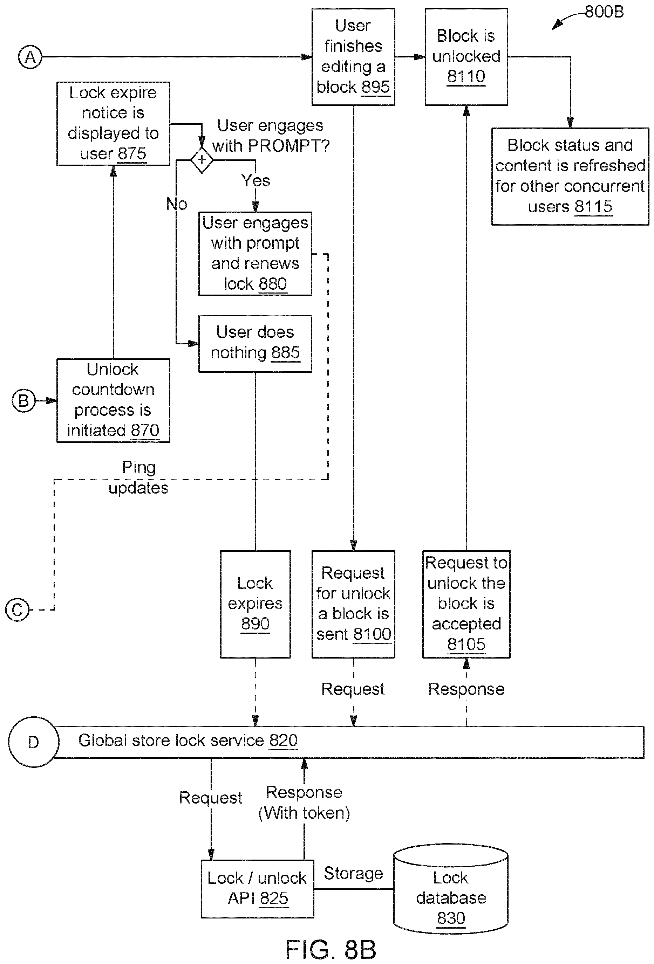

FIGS. 8A-B illustrate a flow diagram that shows a detailed exemplary processes 800A and 800B for managing lock status of blocks in a GUI, in accordance with an exemplary embodiment of the present disclosure. FIGS. 8A-B are explained in conjunction with elements from FIGS. 1, 2, 3, 4, 5, 6, and 7. In an embodiment, the processes 800A and 800B may be implemented in combination by the server 105.

At step 805 of the process 800A, a user (e.g., the user 405) accesses software. The software may be a development environment for an application. A GUI of the software may be rendered to the user device (e.g., the user device 110A) associated with the user.

At step 810 of the process 800A, the user may select a block to edit.

At step 815 of the process 800A, a request for locking the block may be sent to a global store lock service 820 (same as the global store lock service 420).

The global store lock service 820 may share the request with a lock/unlock API 825 (same as the lock/unlock API 425). The lock/unlock API 825 may retrieve lock data from a lock database 830 (e.g., Redis database, analogous to lock database 430) and provide the lock data as a response with a token to the global store lock service 820. The token may have a first predefined expiration time period.

Further, at step 835 of the process 800A, the request for locking the block may be accepted. In other words, the lock status of the block may be modified to indicate that the block is in a locked condition. The block may be rendered as editable on a user device associated with the user and non-editable on user devices corresponding to other users.

At step 840 of the process 800A, the block may be unlocked for the user to enable editing. The block may be rendered as editable on the user device.

At step 845 of the process 800A, the user may engage with experience. The user may edit the block or perform other user activities such as, but not limited to, viewing, previewing, or blocking other users' access to edit. By way of an example, the user may edit the block by adding content to the block, deleting content from the block, or modifying existing content in the block.

At step 850 of the process 800A, activity monitoring may be initiated by the block access determination engine 230. A periodic check may be performed to determine whether the user is active. The check includes detecting an engagement of the user with the block. Detecting the engagement may be based on ping messages received from the user device.

At step 855 of the process 800A, a timer may be started upon accepting the request for locking the block (i.e., after the step 835) by the block access determination engine 230. The timer may be set to be at the same time as the first predefined expiration time period of the token.

If the engagement of the user is detected (for example, via sending and receiving ping updates from the user device) within the first predefined expiration time period, the lock may be auto renewed by the block access determination engine 230, at step 865 of the process 800A. When the lock is auto renewed, the lock status of the block is maintained at the locked condition and is unchanged.

At step 860 of the process 800A, upon auto renewal of the lock, the timer is reset by the block access determination engine 230. Thus, the lock status of the block remains at the locked condition for another duration of the first predefined expiration time period, and the activity monitoring continues.

Further, if the engagement of the user is not detected within the first predefined expiration time period, an unlock countdown process is initiated by the block access determination engine 230, at step 870 of the process 800B.

At step 875 of the process 800B, a lock expiration notice (e.g., a prompt) is displayed to the user device by the notification engine 240 A check is performed to determine whether the user engages with the lock expiration notice within a second predefined expiration time period. An example of the lock expiration notice may be a prompt message asking the user "Are you still editing the block?" followed by a GUI element such as a clickable button. In such a scenario, user engagement with the lock expiration notice may include responding to the prompt by clicking on the clickable button. Another example of the lock expiration notice may be a prompt message saying, "Your session is about to expire". In such a scenario, user engagement with the lock expiration notice may include responding to the prompt by performing actions such as, moving a cursor, keypress, or tapping on the user device. In some embodiments, the response to the prompt may be a voice message or a gesture indication.

At step 880 of the process 800B, if the user engages with the lock expiration notice within the second predefined expiration time period, the lock is renewed by the block access determination engine 230.

At step 885 of the process 800B, if the user does not engage with the lock expiration notice within the second predefined expiration time period and at step 890 of the process 800B, the lock may expire. Steps 885 and 890 ensure that the block is in the unlocked condition when the user is not active (i.e., when the fails to respond to the lock expiration notice) to allow other concurrently active users to edit the block. The steps 885 and 890 also prevent situations where the user unintentionally locks the block or where the user is inactive for a long time or where the user forgets to unlock the block after editing. By avoiding such situations, unnecessary delays may be prevented and a smooth co-working environment may be provided for multiple users.

The global store lock service 820 may update the lock database 830 via the lock/unlock API 825.

However, if the user actively continues to engage with the experience (step 845), the user may finish editing the block at step 895 of the process 800B.

At step 8100 of the process 800B, a request to unlock the block is sent to the global store lock service 820 by the block access determination engine 230. When the user finishes editing the block, the user may send the request to unlock the block via the user device.

At step 8105 of the process 800B, the request to unlock the block is accepted by the global store lock service 820.

At step 8110 of the process 800B, the block is unlocked.

At step 8115 of the process 800B, block status (i.e., lock status of the block) and content are refreshed (i.e., updated) for other concurrent users. The updated lock status of the block indicates that the block is in an unlocked condition and can be edited by any of the other users as well. The updated content corresponds to the content of the block after completion of editing the block by the user.

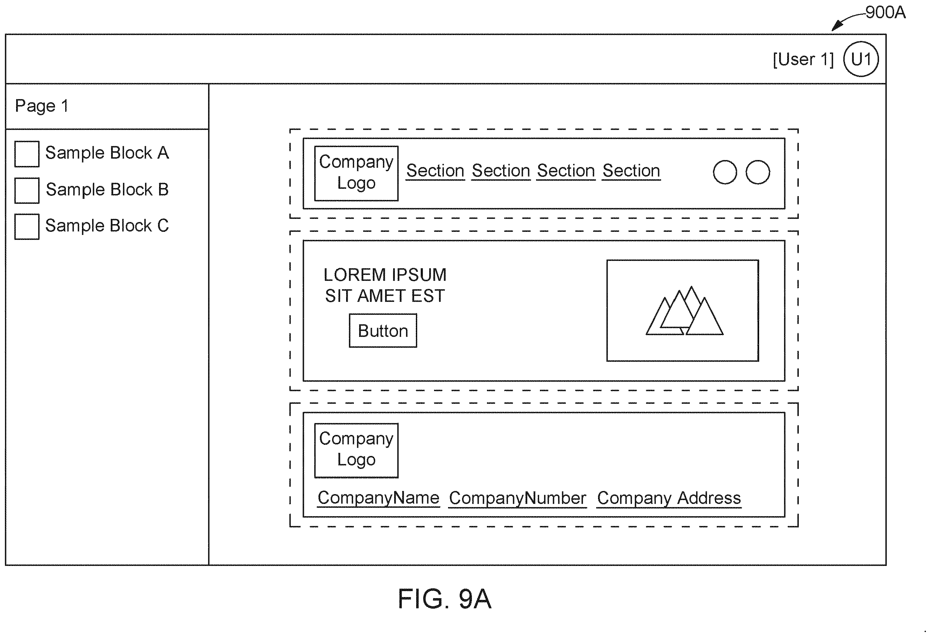

FIGS. 9A-I illustrate GUIs rendered on user devices associated with users at different time instances when a block is edited by one of the users, in accordance with an exemplary embodiment of the present disclosure. By way of an example, three users may be concurrently accessing the development environment of an application. The three users may include a user 1, a user 2, and a user 3. The user 1, the user 2, and the user 3 may be accessing the development environment through a first user device (e.g., the user device 110A), a second user device (e.g., the user device 110B), and a third user device (e.g., the user device 110N), respectively.

In **FIG. 9A****,** a GUI 900A as rendered at a first time instance on the first user device associated with the user 1 is shown. The GUI 900A includes a top panel displaying a username (i.e., user 1), a side panel displaying a page number (i.e., page 1) and a list of blocks in the page, and a content box displaying the blocks and their contents in the page.

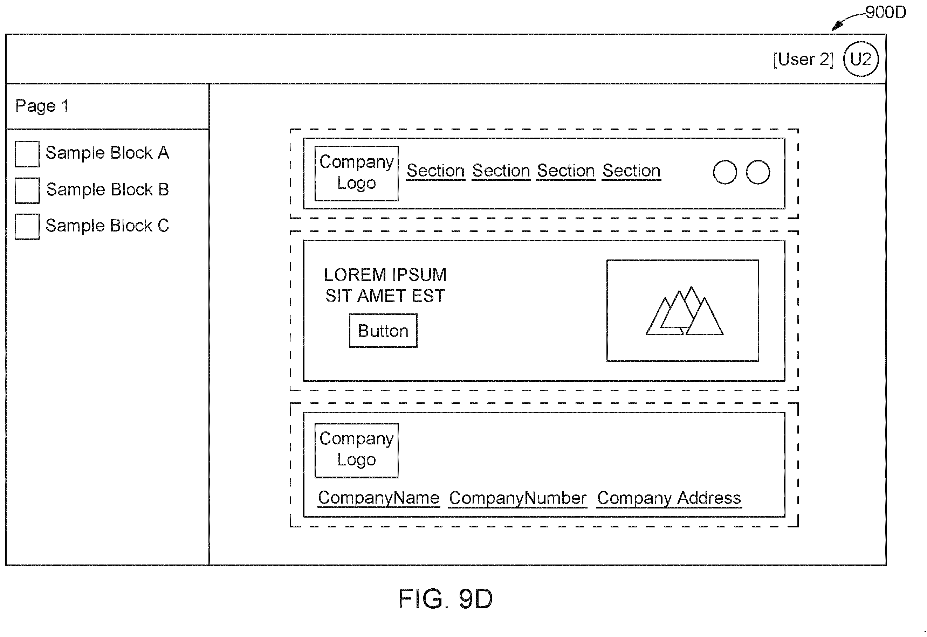

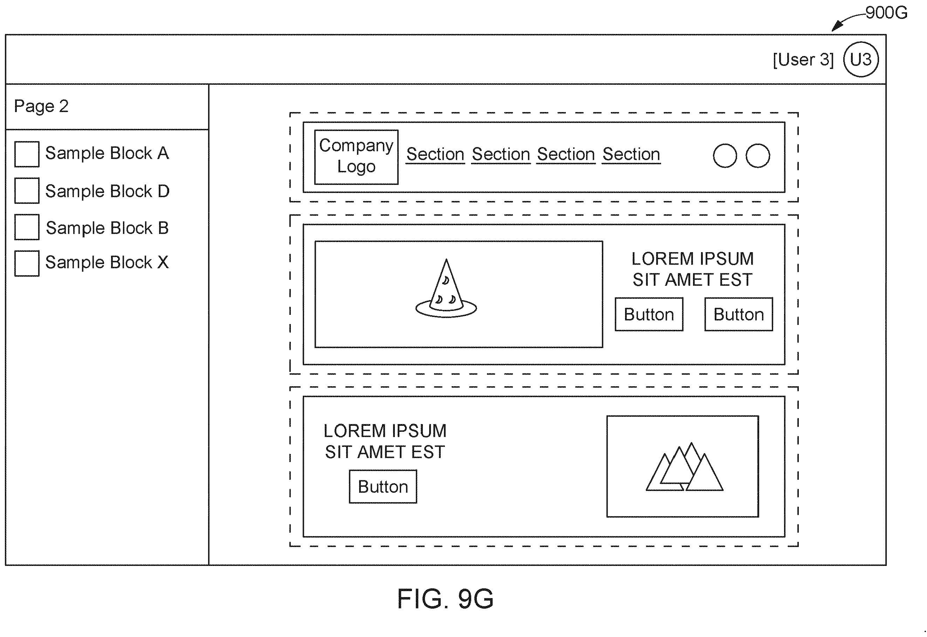

Similarly, in **FIG. 9D****,** a GUI 900D as rendered at the first time instance on the second user device associated with the user 2 is shown, and in **FIG. 9G****,** a GUI 900G as rendered initially on the third user device associated with the user 3 is shown. It should be noted that the user 1 is active on the page 1, the user 2 is active on the page 1, and the user 3 is active on a page 2 of the application. The page 1 includes blocks sample block A, sample block B, and sample block C. The page 2 includes blocks sample block A, sample block B, sample block D, and sample block X. Hence, the blocks sample block A and sample block B are common to both the page 1 and the page 2. The sample block B, at the first time instance, includes a first image and a first text. By way of an example, the first image is a vector image of mountains and the first text is "LOREM IPSUM SIT AMET EST".

It should be noted that in the GUI 900A, the GUI 900D, and the GUI 900G, lock statuses of the blocks of the page 1 and the page 2 indicate that each of the blocks is in the unlocked condition. Thus, each of the blocks of the page 1 is rendered as editable with no active users (i.e., available for selection) on the first user device and the second user device. Each of the blocks of the page 2 is rendered as editable with no active users on the third user device.

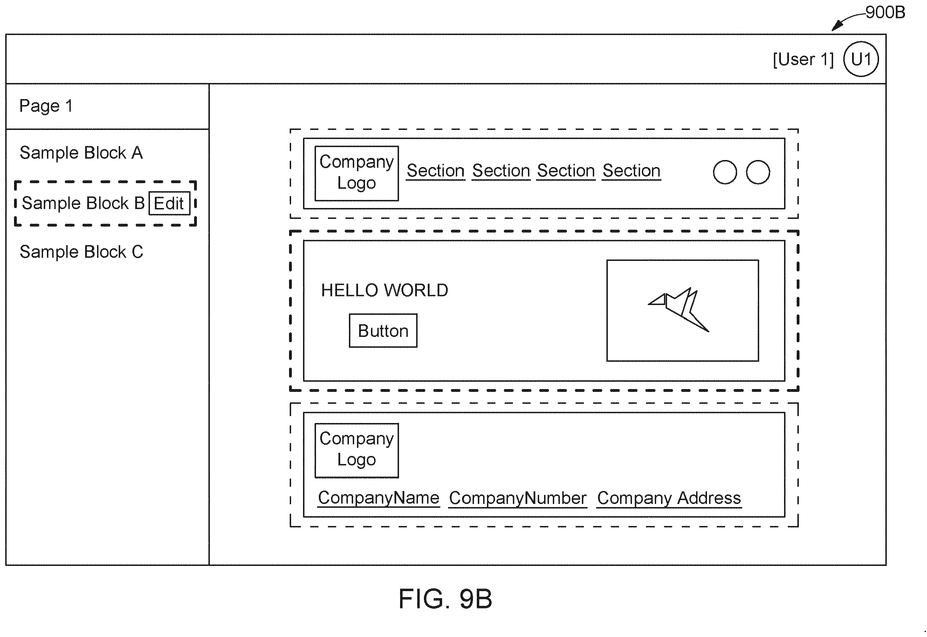

In **FIG. 9B****,** a GUI 900B as rendered at a second time instance on the first user device associated with the user 1 is shown. In GUI 900B, the user 1 provides a selection command to edit the sample block B in the page 1. In other words, the user 1 selects the sample block B to edit the sample block B for performing a user activity on the sample block B (such as editing, reviewing, previewing, blocking editing access of other users, etc.). Further, a locking request is generated based on the selection command. The locking request is then validated and upon successful validation, the lock status of the sample block B may be modified to indicate that the sample block B is in the locked condition. The user 1 may be identified as the active user corresponding to the sample block B. Thus, the sample block B may be rendered as editable (i.e., available for performing the user activity) on the first user device in the GUI 900B for performing the user activity (such as adding, deleting, or modifying the content of the sample block B). The user 1 may perform the user activity without facing any interruption from other users (i.e., the user 2 and the user 3). By way of an example, the user 1 may edit the sample block B at the second time instance by replacing the first image with a second image (for example, a bird vector image) and by replacing the first text with a second text (for example, "HELLO WORLD"). Thus, the sample block B of the second time instance may be modified compared to the sample block B of the first time instance.

The lock statuses of remaining of the blocks of the page 1 (i.e., the sample block A and the sample block C) in the GUI 900B are unchanged. Thus, the sample block A and the sample block C are rendered as editable and unchanged (i.e., same as the sample block A and the sample block C of the first time instance) with no active users on the first user device.

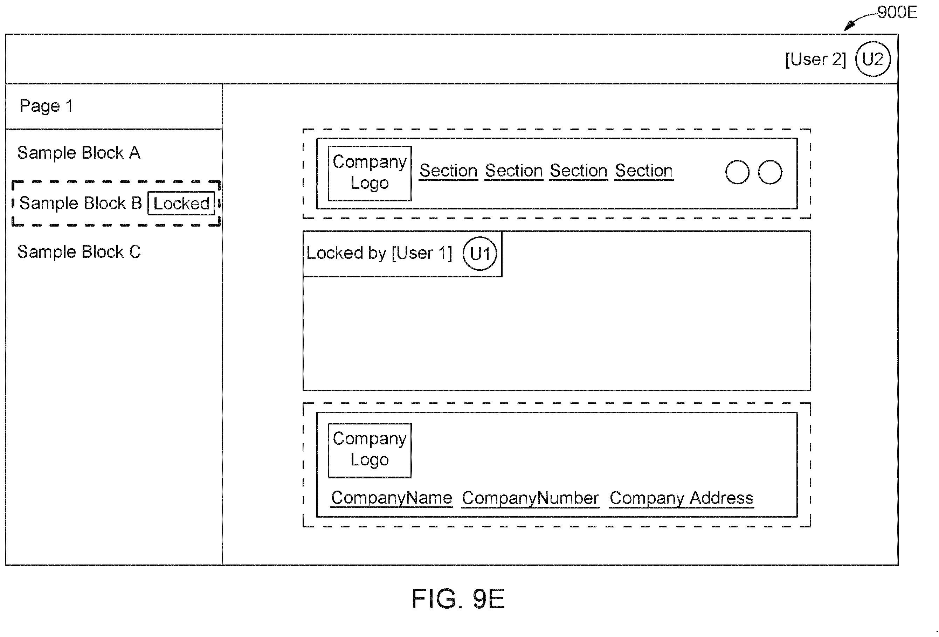

In **FIG. 9E****,** a GUI 900E as rendered at the second time instance on the second user device associated with the user 2 is shown. As described above, at the second time instance, the lock status of the sample block B indicates that the sample block B is in the locked condition and the user 1 is identified as the active user of the sample block B. Therefore, the sample block B is rendered as non-editable on the second user device in the GUI 900E. The sample block B may be rendered as not selectable (i.e., locked) on the second user device in the GUI 900E in the side panel as well as in the content section. Also, the lock statuses of remaining of the blocks of the page 1 in the GUI 900E are unchanged. Thus, the remaining of the blocks of the page 1 in the GUI 900E are rendered as editable with no active users, and unchanged with respect to the first time instance, on the second user device.

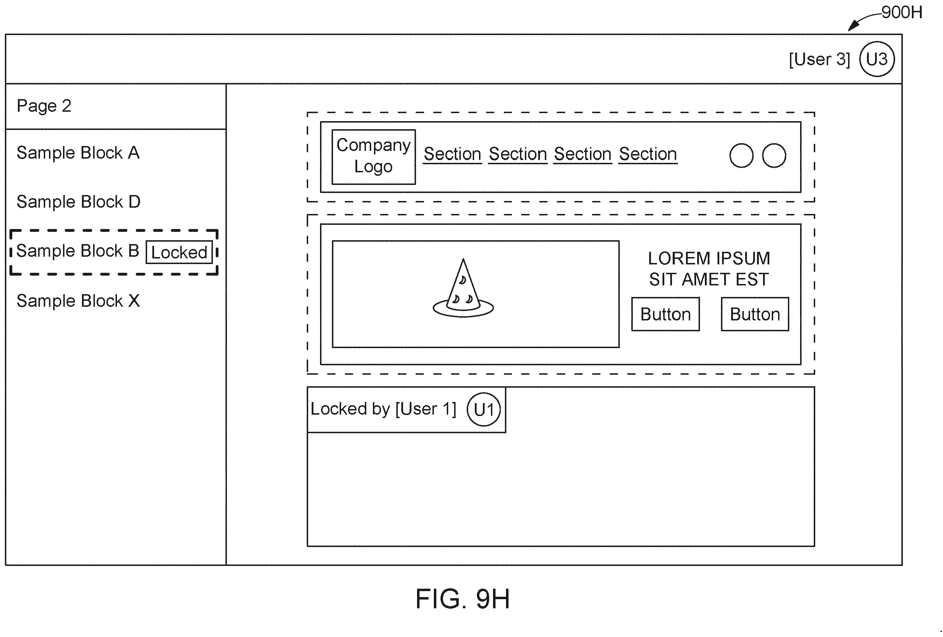

In **FIG. 9H****,** a GUI 900H as rendered at the second time instance on the third user device associated with the user 3 is shown. As described above, at the second time instance, the lock status of the sample block B indicates that the sample block B is in the locked condition and the user 1 is identified as the active user of the sample block B. Therefore, the sample block B is rendered as non-editable on the third user device in the GUI 900H. The sample block B may be rendered as not selectable on the third user device in the GUI 900H in the side panel as well as in the content section. Also, the lock statuses of remaining of the blocks of the page 2 (i.e., the sample block A, the sample block D, and the sample block X) in the GUI 900H are unchanged. Thus, the remaining of the blocks of the page 2 in the GUI 900H are rendered as editable with no active users, and unchanged with respect to the first time instance, on the third user device.

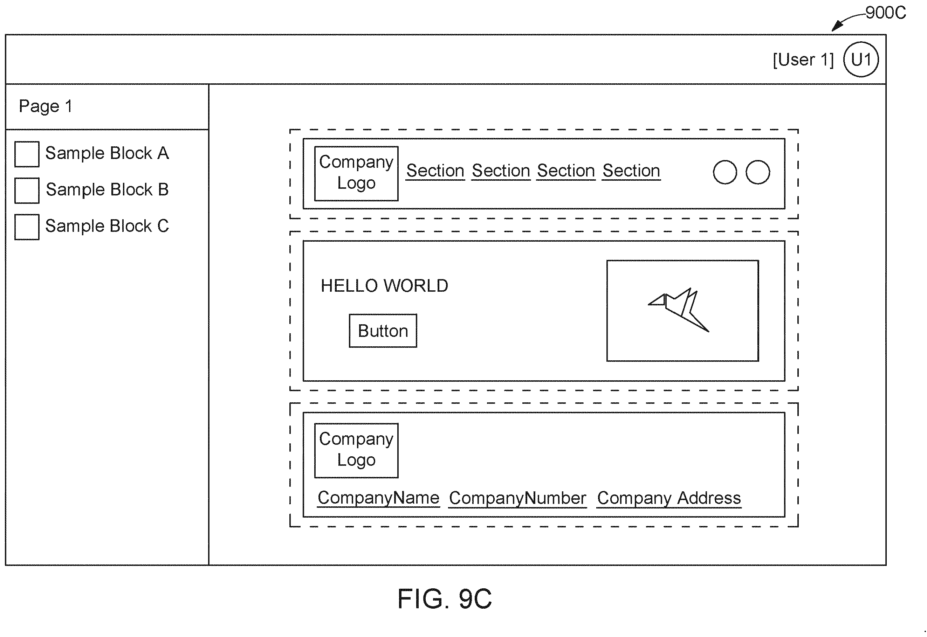

In **FIG. 9C****,** a GUI 900C as rendered at a third time instance on the first user device associated with the user 1 is shown. The user 1, upon performing the user activity (i.e., replacing the first image with the second image and the first text with the second text) on the sample block B, may unselect the sample block B and the user 1 may be classified as an inactive user for the sample block B. Alternatively, if an engagement of the user 1 with the sample block B is not detected for a first predefined expiration time period, the user 1 may be classified as an inactive user for the sample block B. In both cases, the lock status of the sample block B may be modified to indicate that the sample block B is in an unlocked condition. Thus, the sample block B may be rendered as editable with no active users on the first user device. Also, the sample block B of the third time instance in GUI 900C may be same as the sample block B of the second time instance (i.e., in GUI 900B), and may be modified compared to the sample block B of the first time instance (i.e., in GUI 900A). The remaining of the blocks of the page 1 in the GUI 900C are rendered as editable with no active users, and unchanged with respect to the first time instance, on the first user device.

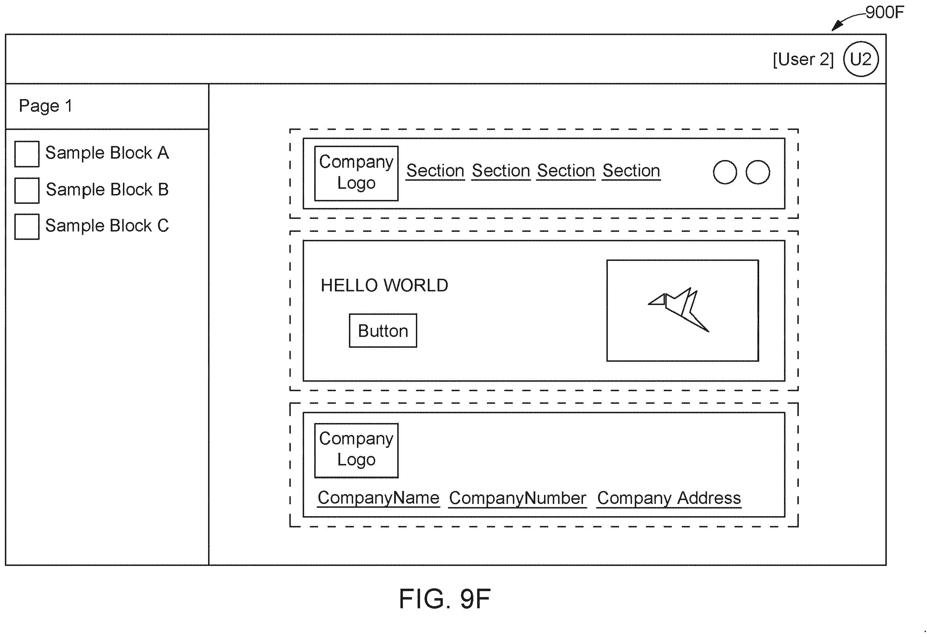

In **FIG. 9F****,** a GUI 900F as rendered at the third time instance on the second user device associated with the user 2 is shown. Upon modification of the lock status of the sample block B to indicate that the sample block B is in the unlocked condition, each of the blocks of the page 1 is rendered as editable with no active users on the second user device. Also, the sample block B of the third time instance in GUI 900F may be modified compared to the sample block B of the first time instance (i.e., the sample block B in GUI 900D). The remaining of the blocks of the page 1 in the GUI 900F are rendered as editable with no active users, and unchanged with respect to the first time instance, on the second user device.

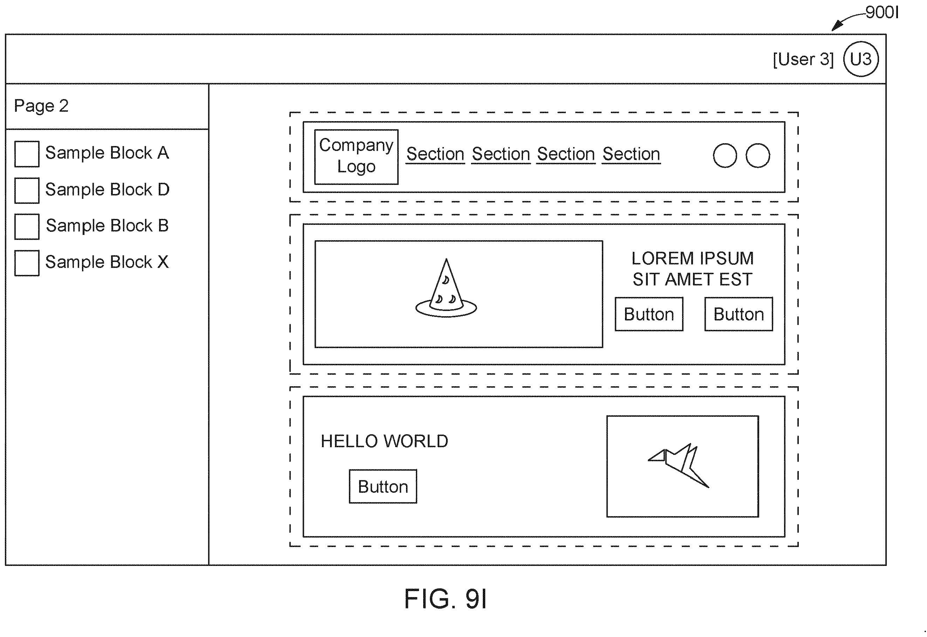

In **FIG. 9I****,** a GUI 9001 as rendered at the third time instance on the third user device associated with the user 3 is shown. Upon modification of the lock status of the sample block B to indicate that the sample block B is in the unlocked condition, each of the blocks of the page 2 is rendered as editable with no active users on the third user device. Also, the sample block B of the third time instance may be same as the sample block B of the second time instance, and may be modified compared to the sample block B of the first time instance. The remaining of the blocks of the page 2 in the GUI 9001 are rendered as editable with no active users, and unchanged with respect to the first time instance, on the third user device.

Thus, a user may edit a block which may be present at multiple pages of an application, at the same time instance. While editing the block, the user may not face a problem of overwriting or interruption by other concurrently active users on any of the multiple pages. Also, the user editing the block may not restrict other users from editing other blocks at the same time instance.

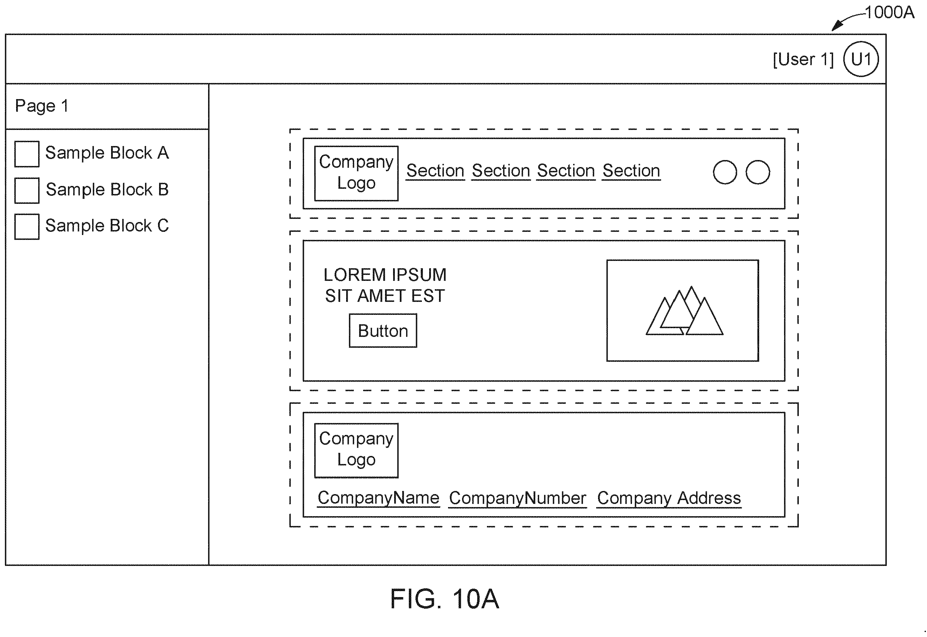

FIGS. 10A-I illustrate GUIs rendered on user devices of users at different time instances when different blocks are edited concurrently by two of the users, in accordance with an exemplary embodiment of the present disclosure. By way of an example, three users may be concurrently accessing the development environment of an application. The three users may include a user 1, a user 2, and a user 3. The user 1, the user 2, and the user 3 may be accessing the development environment through a first user device (e.g., the user device 110A), a second user device (e.g., the user device 110B), and a third user device (e.g., the user device 110N), respectively.

In **FIG. 10A****,** a GUI 1000A as rendered at a first time instance on the first user device associated with the user 1 is shown. The GUI 1000A includes a top panel displaying a username (i.e., user 1), a side panel displaying a page number (i.e., page 1) and a list of blocks in the page, and a content box displaying the blocks in the page.

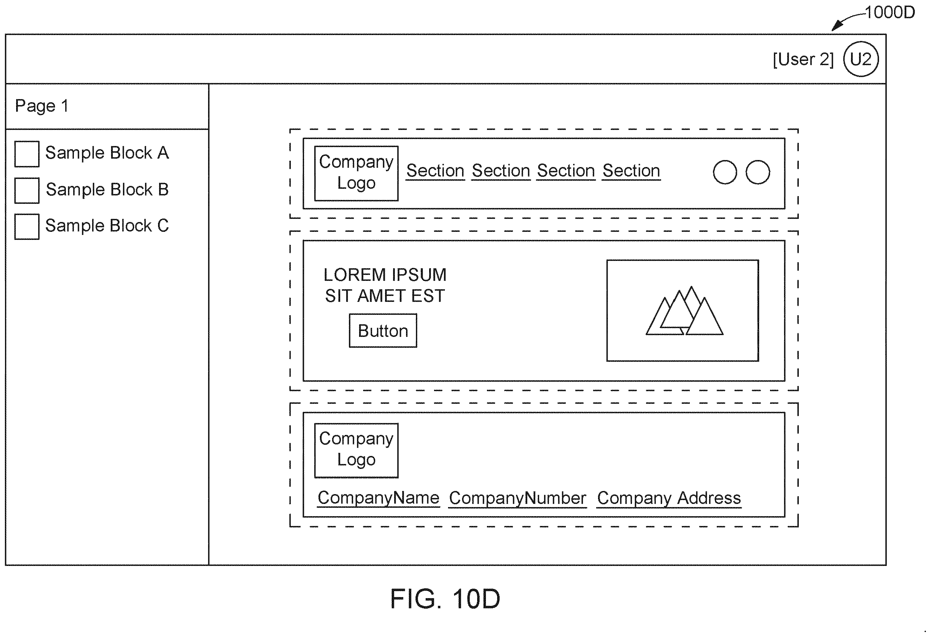

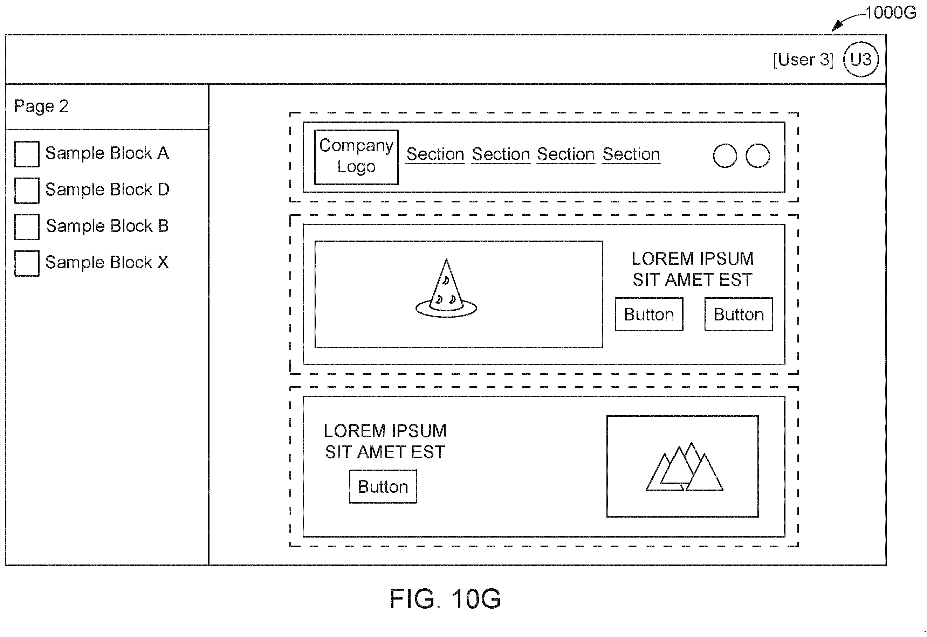

Similarly, in **FIG. 10D****,** a GUI 1000D as rendered at the first time instance on the second user device associated with the user 2 is shown, and in **FIG. 10G****,** a GUI 1000G as rendered initially on the third user device associated with the user 3 is shown. It should be noted that the user 2 is active on the page 1 and the user 3 is active on a page 2 of the application. The page 1 includes sample block A, sample block B, and sample block C. The page 2 includes sample block A, sample block B, sample block D, and sample block X. Hence, the sample block A and sample block B are common to both the page 1 and the page 2. The sample block B, at the first time instance, includes a first image and a first text. By way of an example, the first image is a vector image of mountains, and the first text is "LOREM IPSUM SIT AMET EST". The sample block C, at the first time instance, includes a third image and a third text. By way of an example, the third image is an image of company logo, and the third text includes company name, company number, and company address. The third image and the third text are aligned towards left side of the sample block C at the first time instance.

It should be noted that in the GUI 1000A, the GUI 1000D, and the GUI 1000G (which are rendered simultaneously at the first time instance), lock statuses of the blocks of the page 1 and the page 2 indicate that each of the blocks is in the unlocked condition. Thus, each of the blocks of the page 1 is rendered as editable with no active users (i.e., available for selection) on the first user device and the second user device. Each of the blocks of the page 2 is rendered as editable with no active users on the third user device.

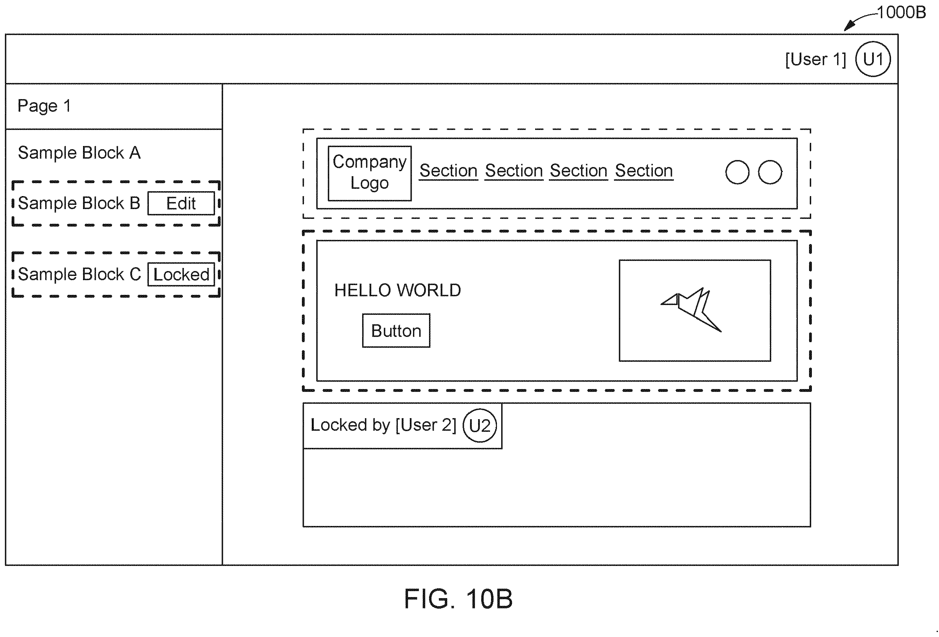

In **FIG. 10B****,** a GUI 1000B as rendered at a second time instance on the first user device associated with the user 1 is shown. In GUI 1000B, the user 1 provides a selection command to edit the sample block B in the page 1. In other words, the user 1 selects the sample block B to edit the sample block B for performing a user activity (such as editing, reviewing, previewing, adding or deleting content, etc.) on the sample block B. Further, a locking request is generated based on the selection command. The locking request is then validated and upon successful validation, the lock status of the sample block B may be modified to indicate that the sample block B is in the locked condition. The user 1 may be identified as an active user corresponding to the sample block B. Thus, the sample block B may be rendered as editable (i.e., available for performing the user activity) on the first user device in the GUI 1000B for performing the user activity. The user 1 may perform the user activity without facing any interruption from other users (i.e., the user 2 and the user 3). By way of an example, the user 1 may edit the sample block B at the second time instance by replacing the first image with a second image (for example, a bird vector image) and by replacing the first text with a second text (for example, "HELLO WORLD"). Thus, the sample block B of the second time instance may be modified compared to the sample block B of the first time instance.

At the second time instance, the lock status of the sample block C indicates that the sample block C is in the locked condition and the user 2 is identified as the active user of the sample block C. Therefore, the sample block C is rendered as non-editable on the first user device in the GUI 1000B. The sample block C may be rendered as not selectable on the first user device in the GUI 1000B in the side panel as well as in the content section. Also, the lock status of remaining block of the page 1 (i.e., the sample block A) in the GUI 1000B is unchanged. Thus, the sample block A in the GUI 1000B is rendered as editable and unchanged (i.e., same as the sample block A of the first time instance) with no active users on the first user device.

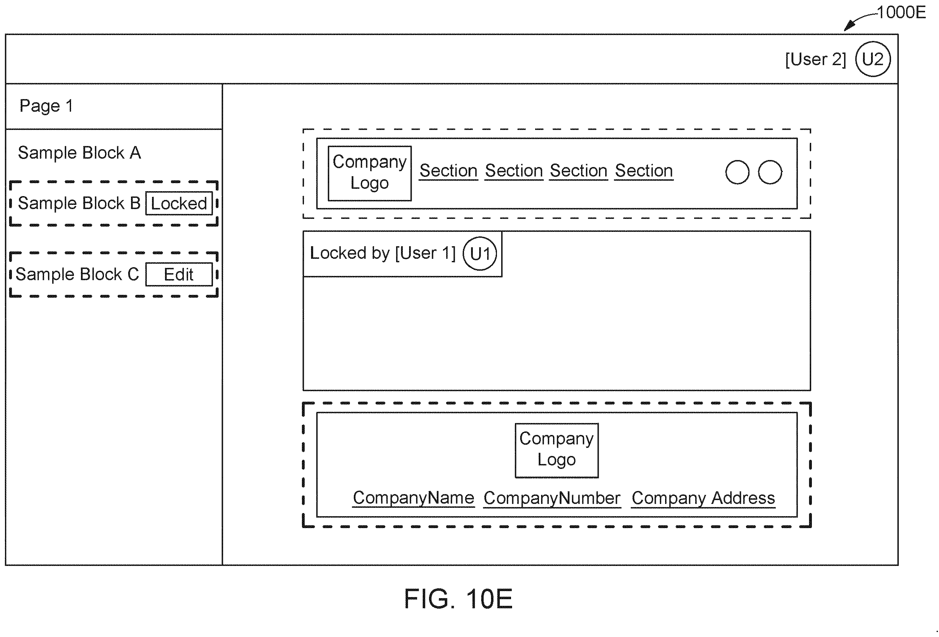

In **FIG. 10E****,** a GUI 1000E as rendered at the second time instance on the second user device associated with the user 2 is shown. In GUI 1000E, the user 2 provides a selection command to edit the sample block C in the page 1. In other words, the user 2 selects the sample block C to edit the sample block C for performing a user activity (such as editing, reviewing, previewing, adding or deleting content, etc.) on the sample block C. Further, a locking request is generated based on the selection command. The locking request is then validated and upon successful validation, the lock status of the sample block C may be modified to indicate that the sample block C is in the locked condition. The user 2 may be identified as the active user corresponding to the sample block C. Thus, the sample block C may be rendered as editable (i.e., available for performing the user activity) on the second user device in the GUI 1000E for performing the user activity. The user 2 may perform the user activity without facing any interruption from other users (i.e., the user 1 and the user 3). By way of an example, the user 2 may edit the sample block C at the second time instance by moving the third image and the third text from the left side to center of the sample block C. Thus, the sample block C of the second time instance may be modified compared to the sample block C of the first time instance.

Also, as described above, at the second time instance, the lock status of the sample block B indicates that the sample block B is in the locked condition and the user 1 is identified as the active user of the sample block B. Therefore, the sample block B is rendered as non-editable on the second user device in the GUI 1000E. The sample block B may be rendered as not selectable on the second user device in the GUI 1000E in the side panel as well as in the content section.

The remaining block of the page 1 (i.e., the sample block A) in the GUI 1000E is rendered as editable and unchanged (i.e., same as the sample block A of the first time instance) with no active users on the second user device.

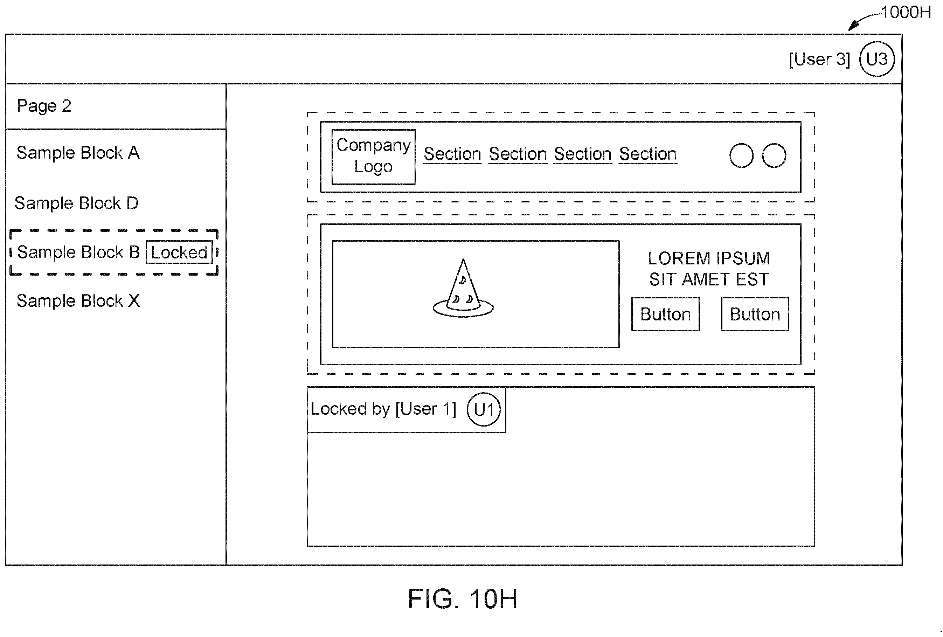

In **FIG. 10H****,** a GUI 1000H as rendered at the second time instance on the third user device associated with the user 3 is shown. As described above, at the second time instance, the lock status of the sample block B indicates that the sample block B is in the locked condition and the user 1 is identified as the active user of the sample block B. Further, there is no instance of the sample block C on page 2. Therefore, the sample block B is rendered as non-editable on the third user device in the GUI 1000H.

The sample block B may be rendered as not selectable on the third user device in the GUI 1000H in the side panel as well as in the content section. Also, the lock statuses of remaining of the blocks of the page 2 (i.e., the sample block A, the sample block D, and the sample block X) in the GUI 1000H are unchanged. Thus, the remaining of the blocks of the page 2 in the GUI 1000E are rendered as editable and unchanged (i.e., same as the sample block A, the sample block D, and the sample block X of the first time instance) with no active users on the third user device.

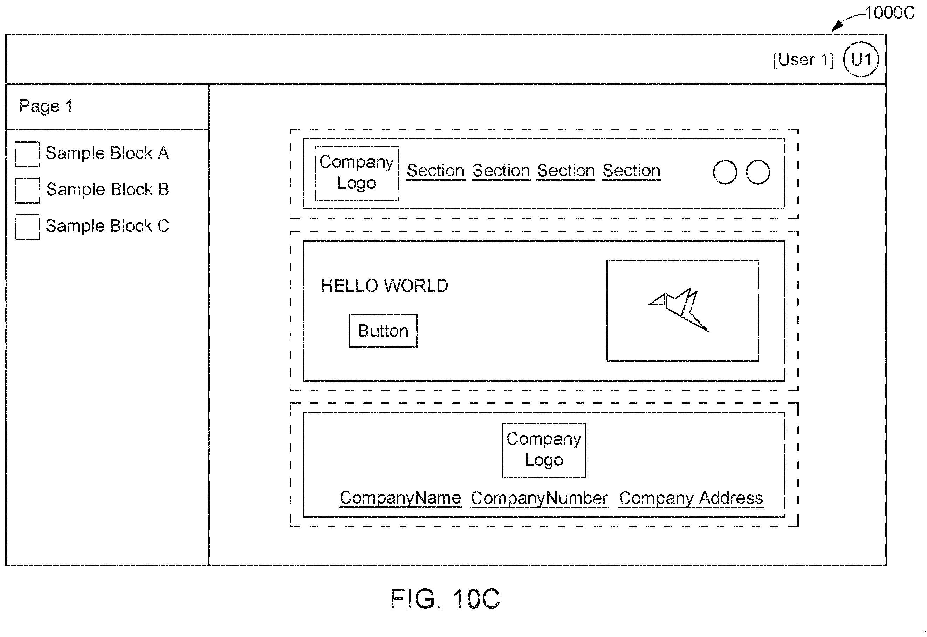

In **FIG. 10C****,** a GUI 1000C as rendered at a third time instance on the first user device associated with the user 1 is shown. The user 1, upon performing the user activity (i.e., replacing the first image with the second image and the first text with the second text) on the sample block B, may unselect the sample block B and the user 1 may be classified as the inactive user for the sample block B. Alternatively, if an engagement of the user 1 with the sample block B is not detected for a first predefined expiration time period, the user 1 may be classified as the inactive user for the sample block B. In both cases, the lock status of the sample block B may be modified to indicate that the sample block B is in the unlocked condition. Thus, the sample block B may be rendered as editable with no active users on the first user device in the GUI 1000C. Also, the sample block B of the third time instance in GUI 1000C may be same as the sample block B of the second time instance (i.e., in GUI 1000B), and may be modified compared to the sample block B of the first time instance (i.e., in GUI 1000A). The sample block C of the third time instance in GUI 1000C may be modified compared to the sample block C of the first time instance (i.e., the sample block C in GUI 1000A). The remaining block of the page 1 in the GUI 1000C, i.e., the sample block A, is rendered as editable with no active users, and unchanged with respect to the first time instance, on the first user device.

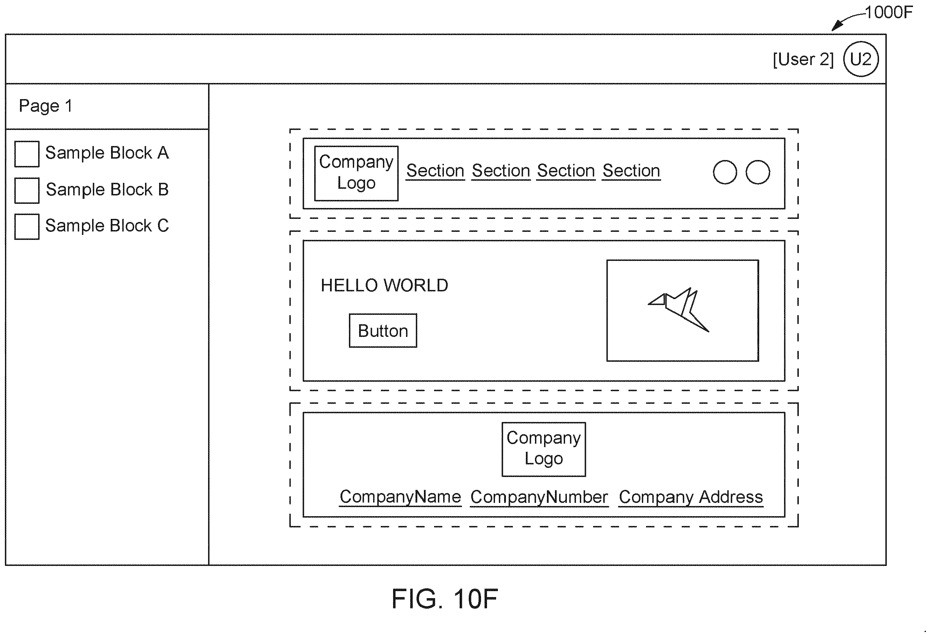

In **FIG. 10F****,** a GUI 1000F as rendered at the third time instance on the second user device associated with the user 2 is shown. The user 2, upon performing the user activity on the sample block C, may unselect the sample block C and the user 2 may be classified as the inactive user for the sample block C. Alternatively, if an engagement of the user 2 with the sample block C is not detected for a first predefined expiration time period, the user 2 may be classified as the inactive user for the sample block C. In both cases, the lock status of the sample block C may be modified to indicate that the sample block C is in the unlocked condition. Thus, the sample block C may be rendered as editable with no active users on the second user device. Also, the sample block C of the third time instance in GUI 1000F may be same as the sample block C of the second time instance (i.e., in GUI 1000E), and may be modified compared to the sample block C of the first time instance (i.e., in GUI 1000D). The sample block B of the third time instance in GUI 1000F may be modified compared to the sample block B of the first time instance (i.e., the sample block B in GUI 1000D). The remaining block of the page 1 in the GUI 1000F, i.e., the sample block A, is rendered as editable with no active users, and unchanged with respect to the first time instance, on the second user device.

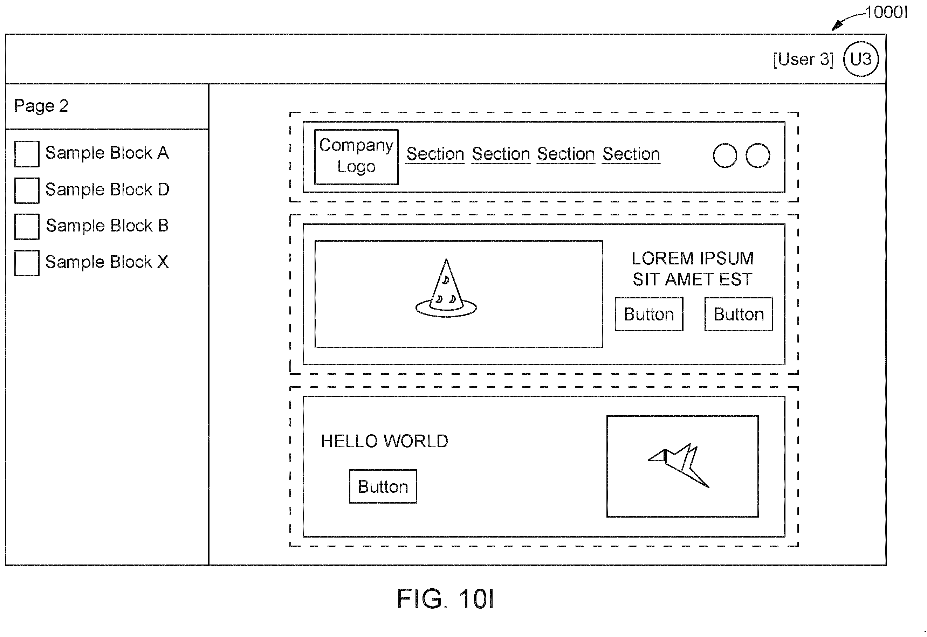

In **FIG. 10I****,** a GUI 1000I as rendered at the third time instance on the third user device associated with the user 3 is shown. Upon modification of the lock status of the sample block B to indicate that the sample block B in the unlocked condition, each of the blocks of the page 2 is rendered as editable with no active users on the third user device. The sample block B of the third time instance in GUI 1000I may be modified compared to the sample block B of the first time instance (i.e., the sample block B in GUI 1000G). The remaining blocks of the page 2 in the GUI 1000I, i.e., the sample block A, the sample block D, and the sample block X are rendered as editable with no active users, and unchanged with respect to the first time instance, on the third user device.

Thus, multiple users can edit different blocks (which may be present at multiple pages of an application) at the same time instance. While editing the respective blocks, the users may not face a problem of overwriting or interruption by other concurrently active users on any of the multiple pages. Also, the users editing the blocks may not restrict other users from editing other blocks at the same time instance.

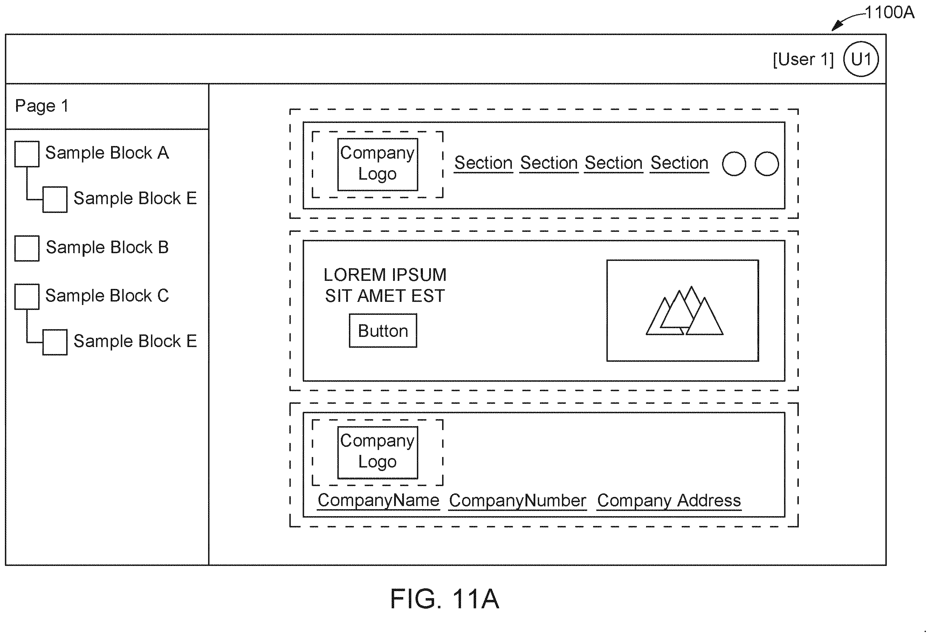

FIGS. 11A-I illustrate GUIs rendered on user devices of users at different time instances when a nested block is edited by one of the users, in accordance with an exemplary embodiment of the present disclosure. By way of an example, three users may be concurrently accessing the development environment of an application. The three users may include a user 1, a user 2, and a user 3. The user 1, the user 2, and the user 3 may be accessing the development environment through a first user device (e.g., the user device 110A), a second user device (e.g., the user device 110B), and a third user device (e.g., the user device 110C), respectively.

In **FIG. 11A****,** a GUI 1100A as rendered at a first time instance on the first user device associated with the user 1 is shown. The GUI 1100A includes a top panel displaying a username (i.e., user 1), a side panel displaying a page number (i.e., page 1) and a list of blocks in the page, and a content box displaying the blocks in the page.

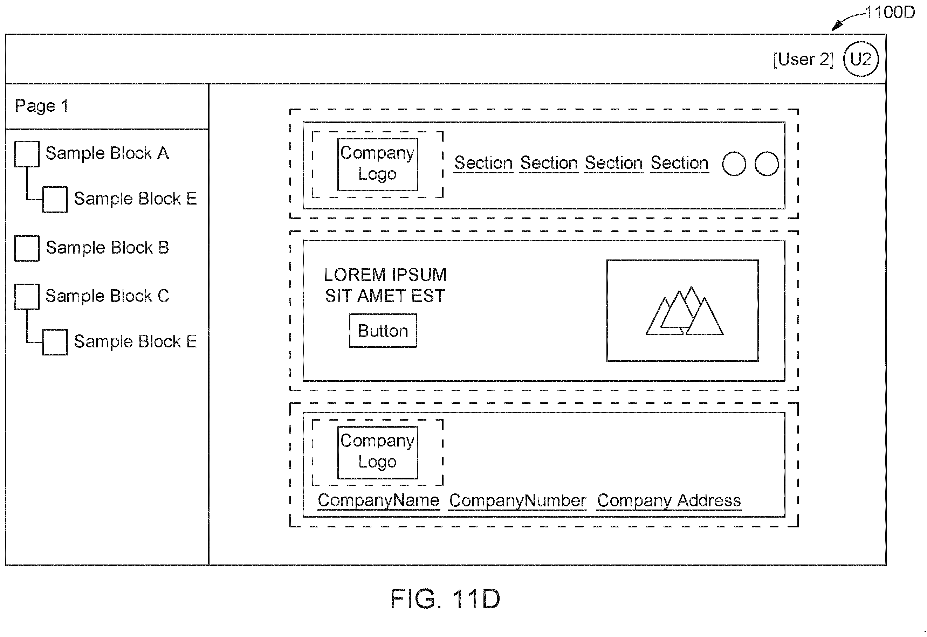

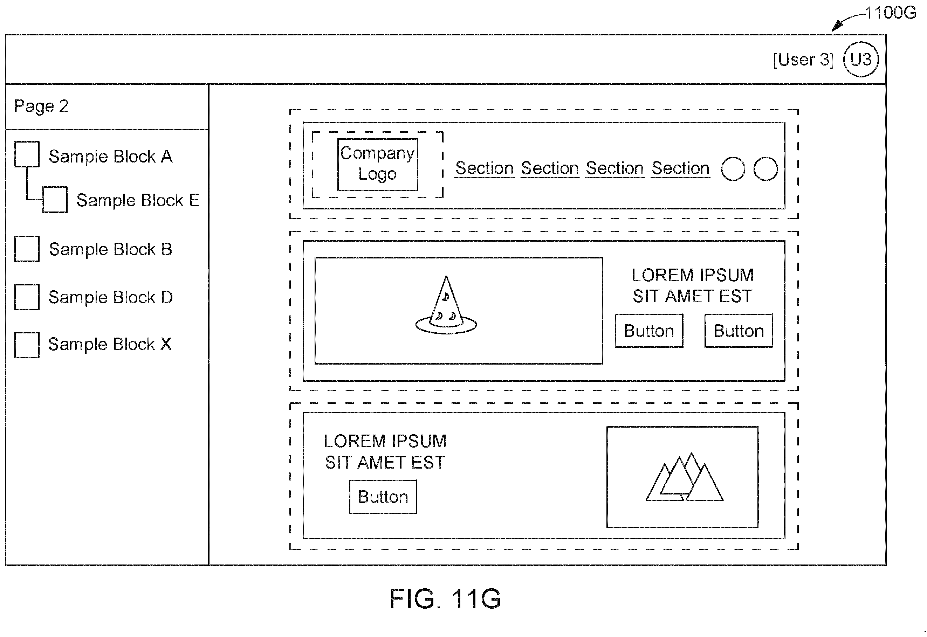

Similarly, in **FIG. 11D****,** a GUI 1100D as rendered at the first time instance on the second user device associated with the user 2 is shown, and in **FIG. 11G****,** a GUI 1100G as rendered initially on the third user device associated with the user 3 is shown. It should be noted that the user 1 is active on the page 1, the user 2 is active on the page 1, and the user 3 is active on a page 2 of the application. The page 1 includes blocks sample block A, sample block B, sample block C, and two instances of the sample block E. A first instance of the sample block E is nested within the sample block A and a second instance of the sample block E is nested within the sample block C. The page 2 includes blocks sample block A, sample block B, sample block D, sample block X, and sample block E. The sample block E is nested within the sample block A. Hence, the blocks sample block A, sample block B, and sample block E are common to both the page 1 and the page 2. The sample block E, at the first time instance, includes a first image. By way of an example, the first image is an image of company logo.

It should be noted that in the GUI 11 00A, the GUI 1100D, and the GUI 1100G, lock statuses of the blocks of the page 1 and the page 2 indicate that each of the blocks is in an unlocked condition. Thus, each of the blocks of the page 1 is rendered as editable with no active users (i.e., available for selection) on the first user device and the second user device. Each of the blocks of the page 2 is rendered as editable with no active users on the third user device.

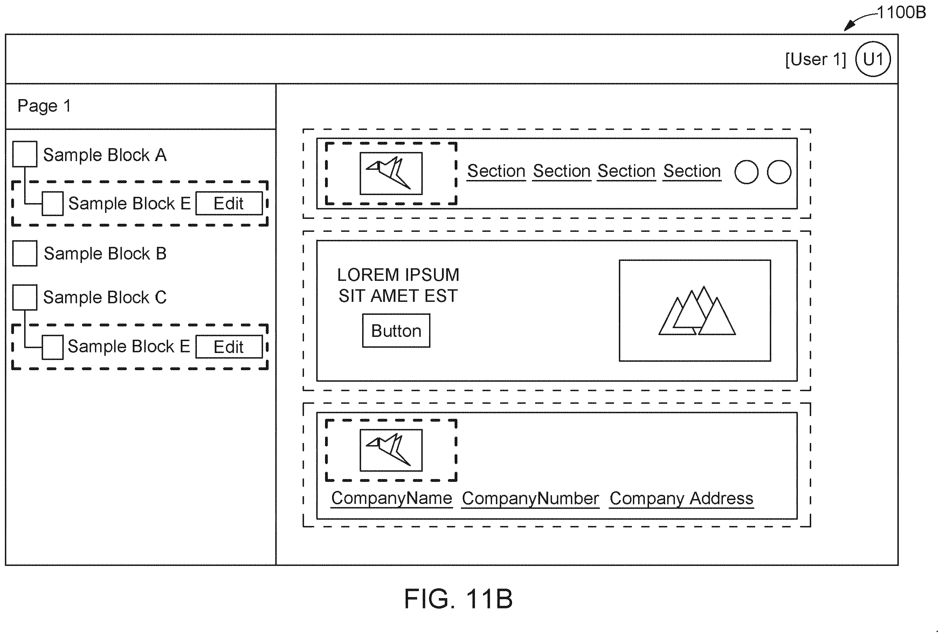

In **FIG. 11B****,** a GUI 1100B as rendered at a second time instance on the first user device associated with the user 1 is shown. In GUI 1100B, the user 1 provides a selection command to edit the sample block E in the page 1. In other words, the user 1 selects one of the first instance or the second instance of the sample block E to edit the sample block E for performing a user activity on the sample block E (such as editing, reviewing, previewing, blocking editing access of other users, etc.). Further, a locking request is generated based on the selection command. The locking request is then validated and upon successful validation, the lock status of the sample block E may be modified to indicate that the sample block E is in the locked condition. The user 1 may be identified as the active user corresponding to the sample block E.

Thus, both the first instance of the sample block E and the second instance of the sample block E may be rendered as editable (i.e., available for performing the user activity) on the first user device in the GUI 1100B for performing the user activity. The user 1 may perform the user activity on sample block E without facing any interruption from other users (i.e., the user 2 and the user 3). By way of an example, the user 1 may edit the sample block E at the second time instance by replacing the first image with a second image (for example, a bird vector image). Thus, the sample block E of the second time instance may be modified compared to the sample block E of the first time instance.

It should be noted that modifications done by the user activity on one of the first instance or the second instance of the sample block E may reflect in the other instance of the sample block E in real-time. Additionally, it should be noted that any change in the lock status of the first instance of the sample block E may not affect the lock status of the sample block A. Similarly, any change in the lock status of the second instance of the sample block E may not affect the lock status of the sample block C.

The lock statuses of remaining of the blocks of the page 1 (i.e., the sample block A, the sample block B, and the sample block C) in the GUI 1100B are unchanged. Thus, the sample block A, the sample block B, and the sample block C are rendered as editable and unchanged (i.e., same as the sample block A, the sample block B, and the sample block C of the first time instance) with no active users on the first user device.

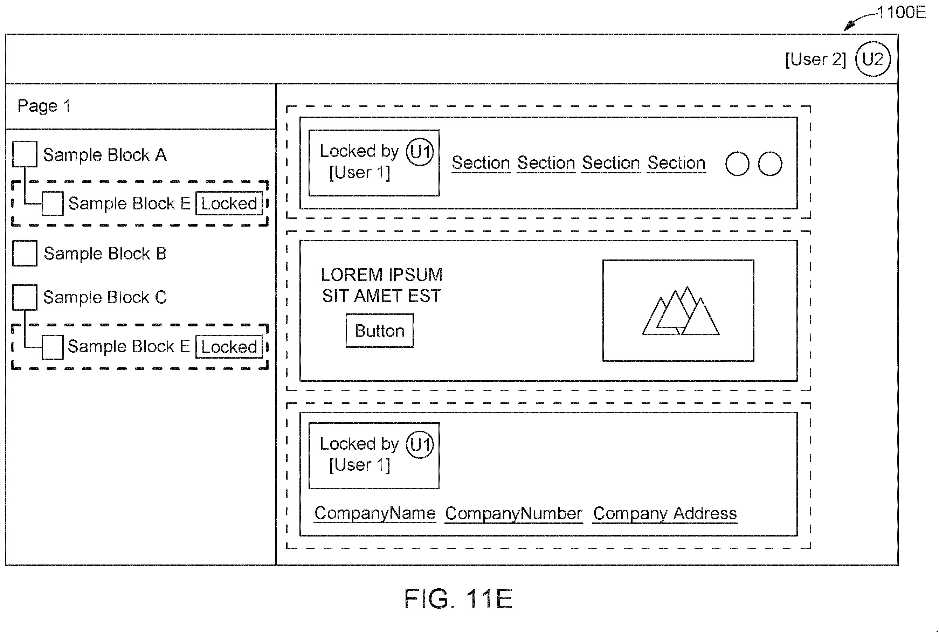

In **FIG. 11E****,** a GUI 1100E as rendered at the second time instance on the second user device associated with the user 2 is shown. As described above, at the second time instance, the lock status of the sample block E indicates that the sample block E is in the locked condition and the user 1 is identified as the active user of the sample block E. Therefore, the first instance and the second instance of the sample block E are rendered as non-editable on the second user device in the GUI 1100E. The first instance and the second instance of the sample block E may be rendered not selectable (i.e., locked) on the second user device in the GUI 1100E in the side panel as well as in the content section. Also, the lock statuses of remaining of the blocks of the page 1 in the GUI 1100E are unchanged. Thus, the remaining of the blocks (sample block A, the sample block B, and the sample block C) of the page 1 in the GUI 1100E are rendered as editable, and unchanged with respect to the first time instance, with no active users on the second user device.

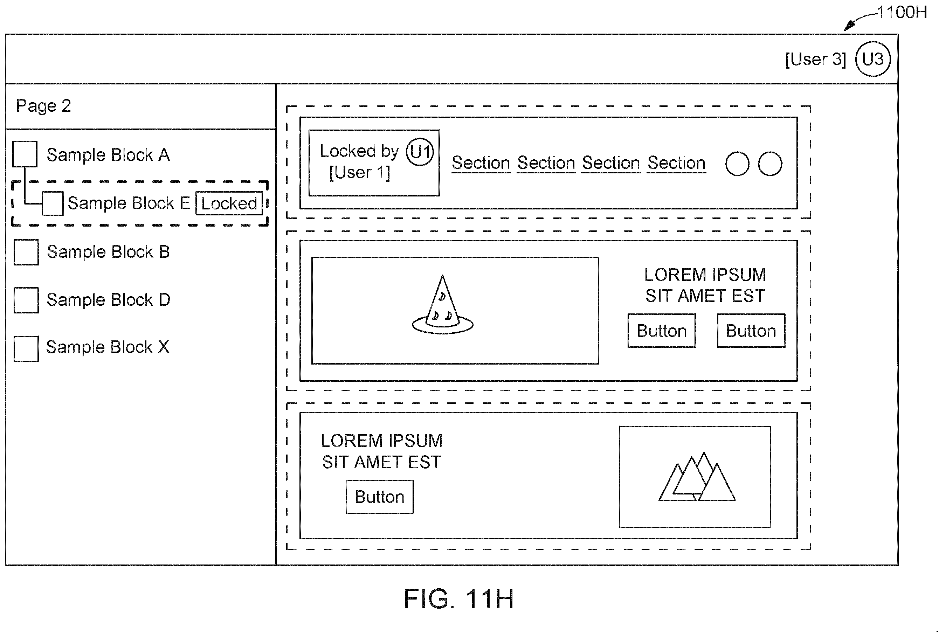

In **FIG. 11H****,** a GUI 1100H as rendered at the second time instance on the third user device associated with the user 3 is shown. As described above, at the second time instance, the lock status of the sample block E indicates that the sample block E is in the locked condition and the user 1 is identified as the active user of the sample block E. Therefore, the sample block E is rendered as non-editable on the third user device in the GUI 1100H. The sample block E may be rendered as not selectable on the third user device in the GUI 1100H in the side panel as well as in the content section. Also, the lock statuses of remaining of the blocks of the page 2 (i.e., the sample block A, the sample block B, the sample block D, and the sample block X) in the GUI 1100H are unchanged. Thus, the remaining of the blocks of the page 2 in the GUI 1100E are rendered as editable, and unchanged with respect to the first time instance, with no active users on the third user device. It should be noted that any change in the lock status or the editability of the first instance of the sample block E may not affect the lock status of the sample block A.

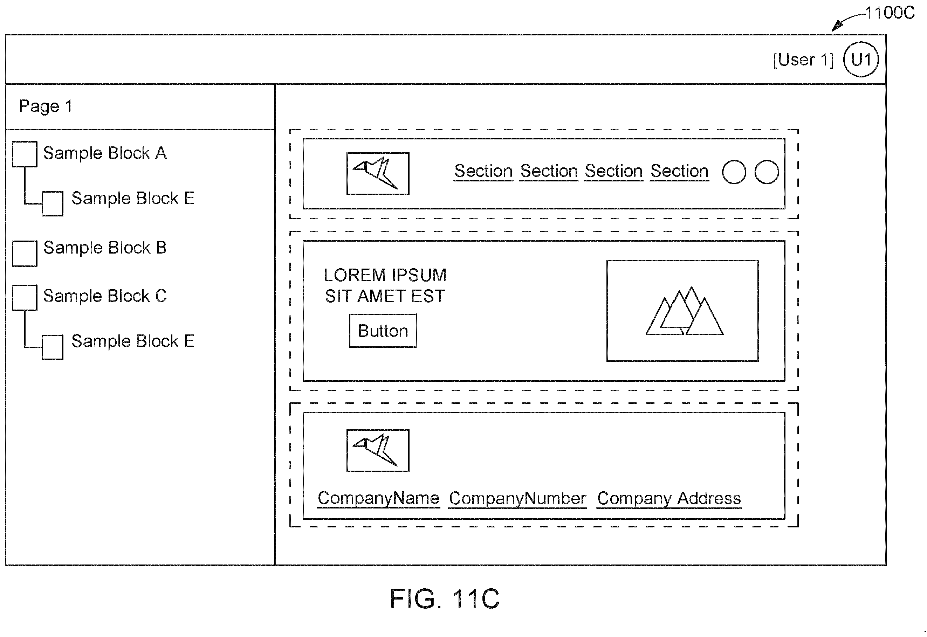

In **FIG. 11C****,** a GUI 1100C as rendered at a third time instance on the first user device associated with the user 1 is shown. The user 1, upon performing the user activity (i.e., replacing the first image with the second image) on one of the first instance or the second instance of the sample block E, may unselect the sample block E and the user 1 may be classified as an inactive user for the sample block E. Alternatively, if an engagement of the user 1 with the one of the first instance or the second instance of the sample block E is not detected for a first predefined expiration time period, the user 1 may be classified as an inactive user for the sample block E. In both the cases, the lock status of the sample block E may be modified to indicate that the sample block E is in an unlocked condition. Thus, both the first instance and the second instance of the sample block E may be rendered as editable with no active users on the first user device. Also, the sample block E of the third time instance in GUI 1100C may be same as the sample block E of the second time instance (i.e., in GUI 1100B), and may be modified compared to the sample block E of the first time instance (i.e., in GUI 1100A). The remaining of the blocks of the page 1 in the GUI 1100C are rendered as editable with no active users, and unchanged with respect to the first time instance, on the first user device.

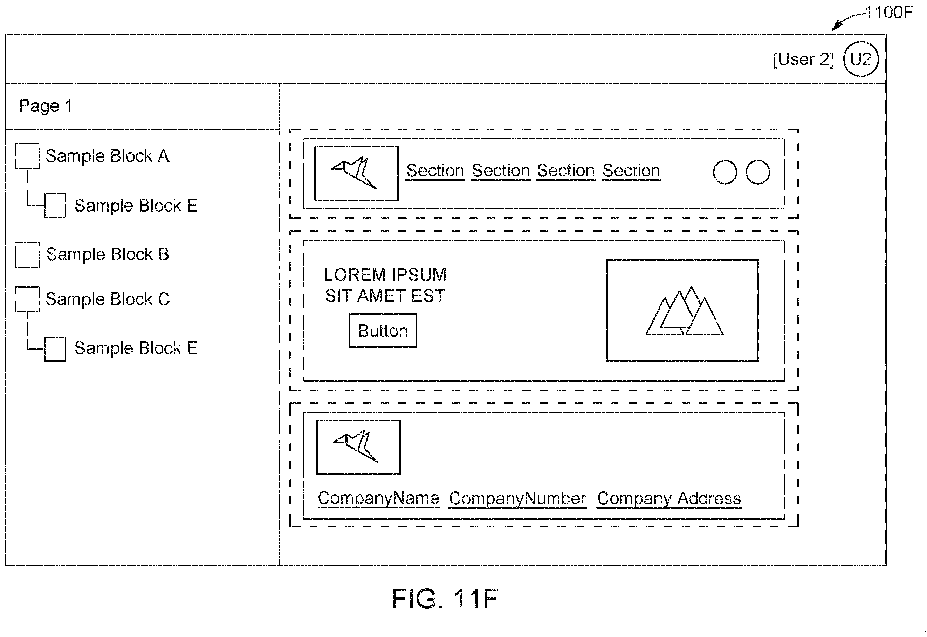

In **FIG. 11F****,** a GUI 1100F as rendered at the third time instance on the second user device associated with the user 2 is shown. Upon modification of the lock status of the sample block E to indicate that the sample block E is in the unlocked condition, each of the blocks of the page 1 is rendered as editable with no active users on the second user device. Also, the sample block E of the third time instance in GUI 1100F may be modified compared to the sample block E of the first time instance (i.e., in GUI 1100D). The remaining of the blocks of the page 1 in the GUI 1100F are rendered as editable with no active users, and unchanged with respect to the first time instance, on the first user device.

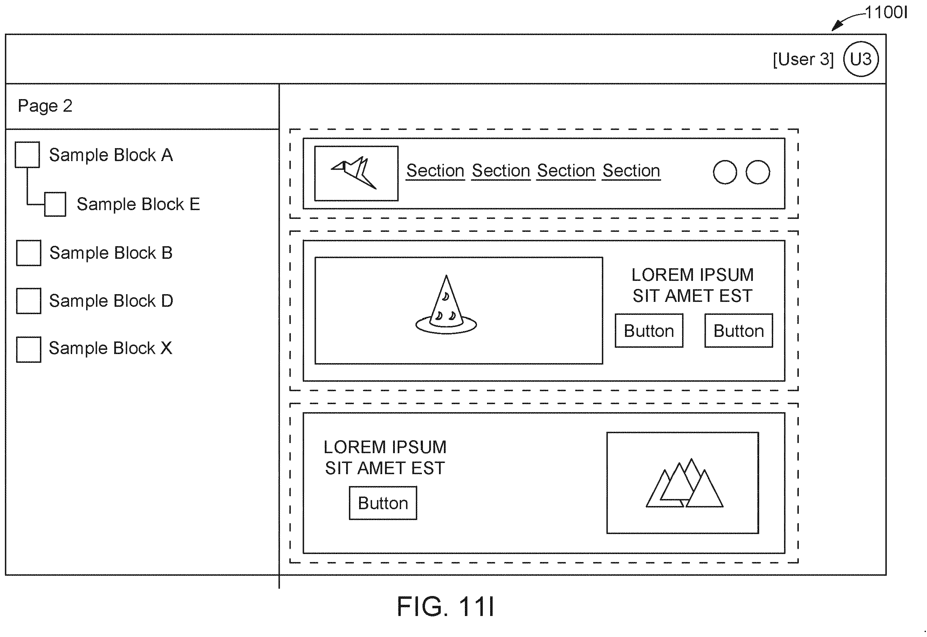

In **FIG. 11I****,** a GUI 1100I as rendered at the third time instance on the third user device associated with the user 3 is shown. Upon modification of the lock status of the sample block E to indicate that the sample block E is in the unlocked condition, each of the blocks of the page 2 is rendered as editable with no active users on the third user device. Also, the sample block E of the third time instance in GUI 1100I may be modified compared to the sample block E of the first time instance (i.e., in GUI 1100G). The remaining of the blocks of the page 1 in the GUI 1 100I are rendered as editable with no active users, and unchanged with respect to the first time instance, on the first user device.

Thus, a user may edit a block which is nested within another block without facing a problem of overwriting or interruption by other concurrently active users. The nested block may have multiple instances on multiple pages. Each of the multiple instances of the nested block may be protected from overwriting when the user is editing the nested block. Also, the user editing the nested block may not restrict other users from editing other blocks at the same time instance.

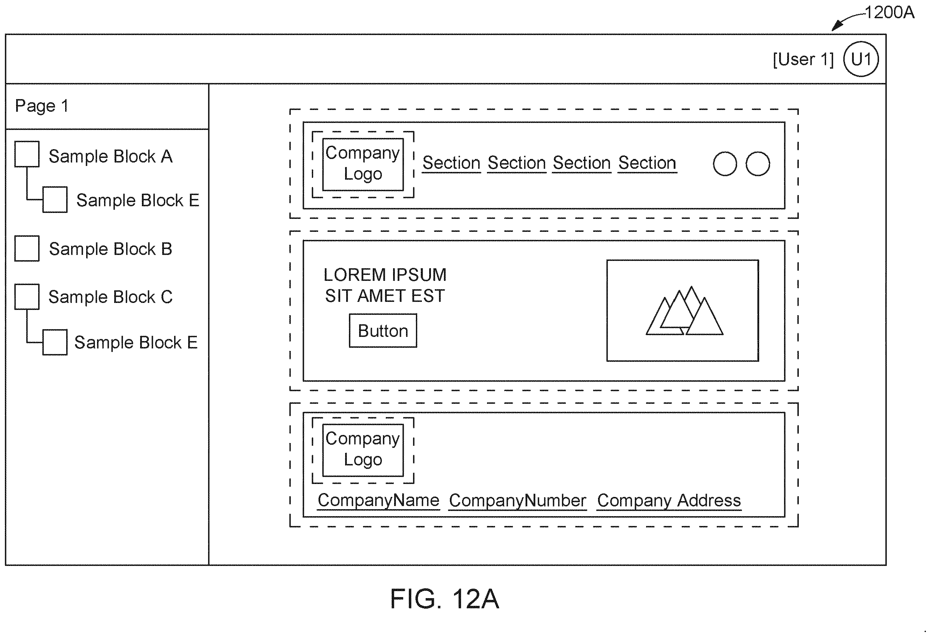

FIGS. 12A-O illustrate GUIs rendered on user devices of users at different time instances when different nested blocks are edited concurrently by two of the users, in accordance with an exemplary embodiment of the present disclosure. By way of an example, three users may be concurrently accessing the development environment of an application. The three users may include a user 1, a user 2, and a user 3. The user 1, the user 2, and the user 3 may be accessing the development environment through a first user device (e.g., the user device 110A), a second user device (e.g., the user device 110B), and a third user device (e.g., the user device 110C), respectively.

In **FIG. 12A****,** a GUI 1200A as rendered at a first time instance on the first user device associated with the user 1 is shown. The GUI 1200A includes a top panel displaying a username (i.e., user 1), a side panel displaying a page number (i.e., page 1) and a list of blocks in the page, and a content box displaying the blocks in the page.

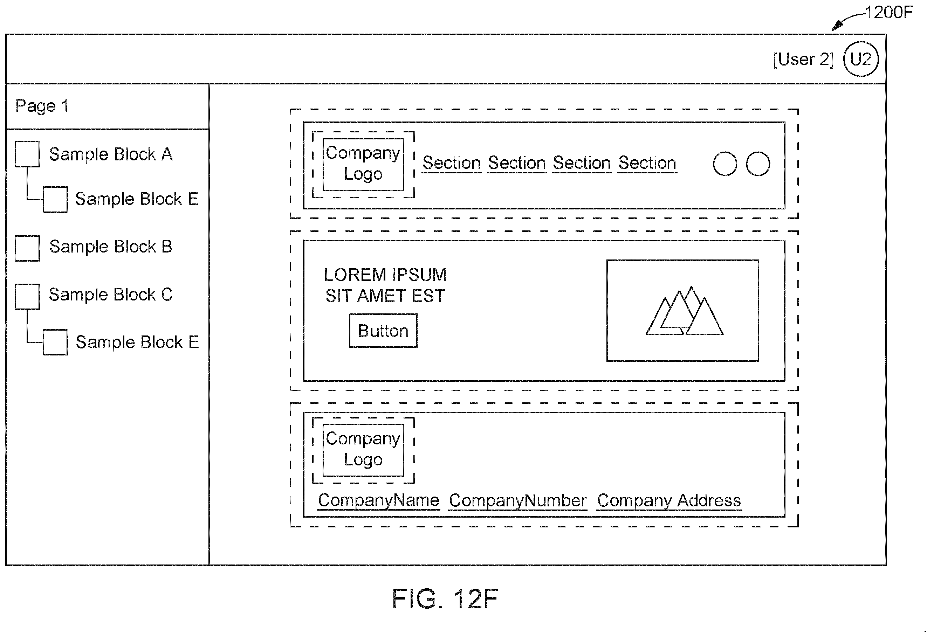

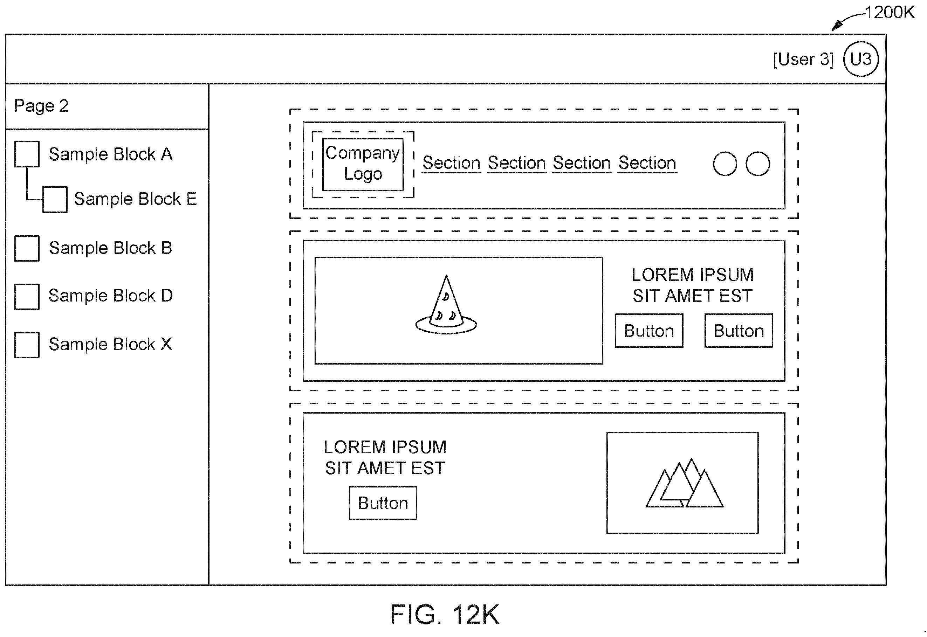

Similarly, in **FIG. 12F****,** a GUI 1200F as rendered at the first time instance on the second user device associated with the user 2 is shown, and in **FIG. 12K****,** a GUI 1200K as rendered initially on the third user device associated with the user 3 is shown. It should be noted that the user 1 is active on the page 1, the user 2 is active on the page 1, and the user 3 is active on a page 2 of the application. The page 1 includes blocks sample block A, sample block B, sample block C, and two instances of the sample block E. A first instance of the sample block E is nested within the sample block A and a second instance of the sample block E is nested within the sample block C. The page 2 includes blocks sample block A, sample block B, sample block D, sample block X, and sample block E. The sample block E is nested within the sample block A. Hence, the blocks sample block A, sample block B, and sample block E are common to both the page 1 and the page 2. The sample block A, at the first time instance, includes 4 sections. The sample block E, at the first time instance, includes a first image. By way of an example, the first image is an image of company logo.

It should be noted that in the GUI 1200A, the GUI 1200F, and the GUI 1200K, lock statuses of the blocks of the page 1 and the page 2 indicate that each of the blocks is in an unlocked condition. Thus, each of the blocks of the page 1 is rendered as editable with no active users (i.e., available for selection) on the first user device and the second user device. Each of the blocks of the page 2 is rendered as editable with no active users on the third user device.

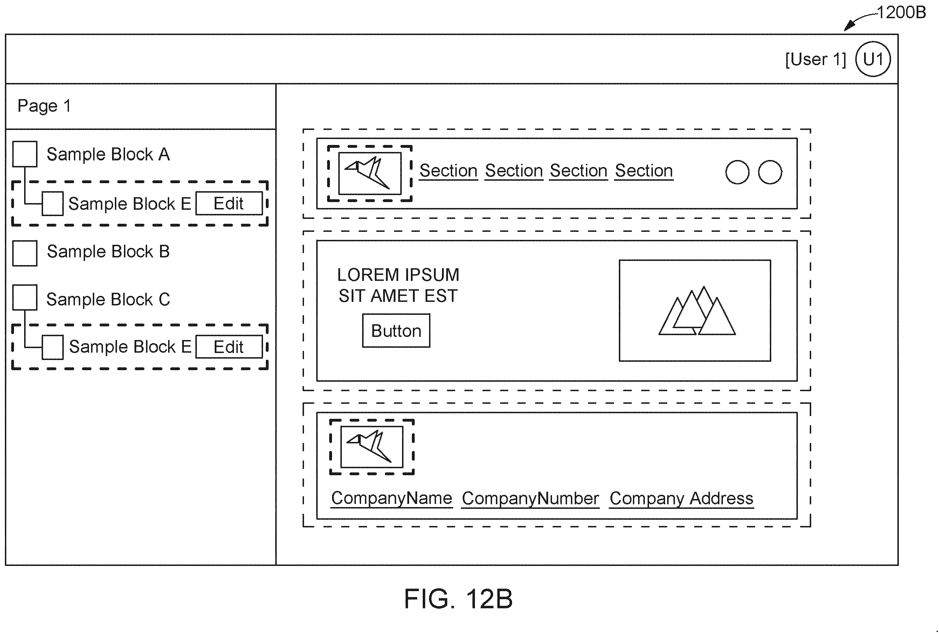

In **FIG. 12B****,** a GUI 1200B as rendered at a second time instance on the first user device associated with the user 1 is shown. In GUI 1200B, the user 1 provides a selection command to edit the sample block E in the page 1. In other words, the user 1 selects one of the first instance or the second instance of the sample block E to edit the sample block E for performing a user activity on the sample block E (such as editing, reviewing, previewing, blocking editing access of other users, etc.). Further, a locking request is generated based on the selection command. The locking request is then validated and upon successful validation, the lock status of the sample block E may be modified to indicate that the sample block E is in the locked condition. The user 1 may be identified as the active user corresponding to the sample block E.

Thus, both the first instance of the sample block E and the second instance of the sample block E may be rendered as editable (i.e., available for performing the user activity) on the first user device in the GUI 1200B for performing the user activity. The user 1 may perform the user activity on sample block E at the second time instance without facing any interruption from other users (i.e., the user 2 and the user 3). By way of an example, the user 1 may edit the sample block E at the second time instance by replacing the first image with a second image (for example, a bird vector image). Thus, the sample block E of the second time instance may be modified compared to the sample block E of the first time instance.

It should be noted that modifications done by the user activity on one of the first instance or the second instance of the sample block E may reflect in the other instance of the sample block E in real-time. Additionally, it should be noted that any change in the lock status of the first instance of the sample block E may not affect the lock status of the sample block A. Similarly, any change in the lock status of the second instance of the sample block E may not affect the lock status of the sample block C.

The lock statuses of remaining of the blocks of the page 1 (i.e., the sample block A, the sample block B, and the sample block C) in the GUI 1200B are unchanged. Thus, the sample block A, the sample block B, and the sample block C are rendered as editable and unchanged (i.e., same as the sample block A, the sample block B, and the sample block C of the first time instance) with no active users on the first user device.

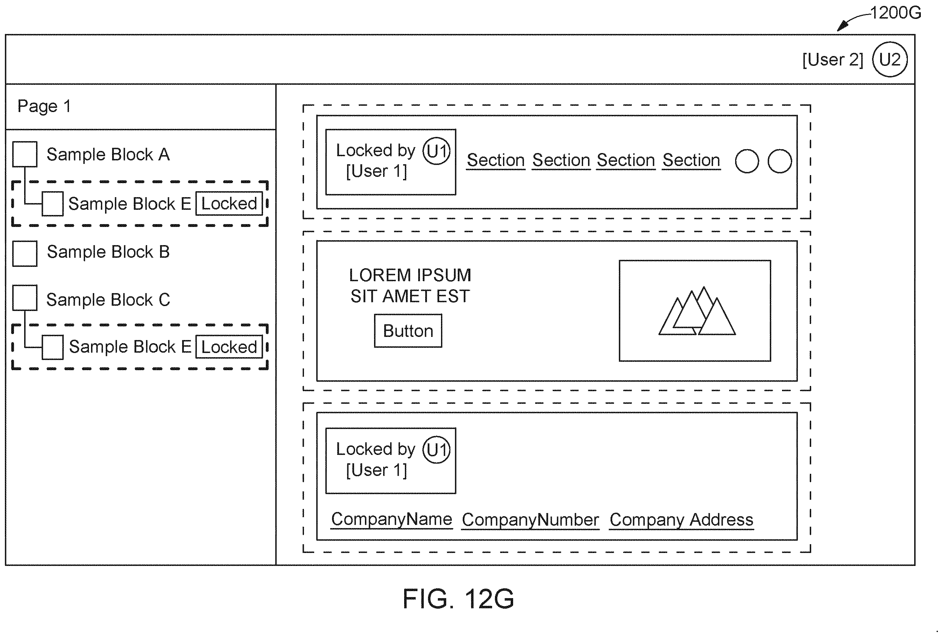

In **FIG. 12G****,** a GUI 1200G as rendered at the second time instance on the second user device associated with the user 2 is shown. As described above, at the second time instance, the lock status of the sample block E indicates that the sample block E is in the locked condition and the user 1 is identified as the active user of the sample block E. Therefore, the first instance and the second instance of the sample block E are rendered as non-editable on the second user device in the GUI 1200G. The first instance and the second instance of the sample block E may be rendered not selectable (i.e., locked) on the second user device in the GUI 1200G in the side panel as well as in the content section. Also, the lock statuses of remaining of the blocks of the page 1 in the GUI 1200G are unchanged. Thus, the remaining of the blocks of the page 1 in the GUI 1200G are rendered as editable, and unchanged with respect to the first time instance, with no active users on the second user device.

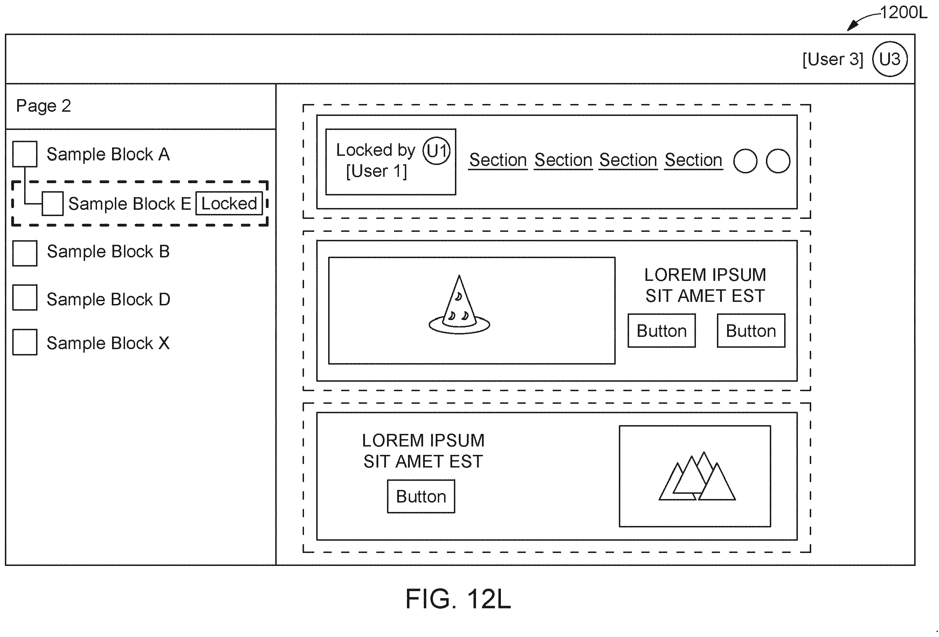

In **FIG. 12L****,** a GUI 1200L as rendered at the second time instance on the third user device associated with the user 3 is shown. As described above, at the second time instance, the lock status of the sample block E indicates that the sample block E is in the locked condition and the user 1 is identified as the active user of the sample block E. Therefore, the sample block E is rendered as non-editable on the third user device in the GUI 1200L. The sample block E may be rendered as non-selectable on the third user device in the GUI 1200L in the side panel as well as in the content section. Also, the lock statuses of remaining of the blocks of the page 2 (i.e., the sample block A, the sample block B, the sample block D, and the sample block X) in the GUI 1200L are unchanged. Thus, the remaining of the blocks of the page 2 in the GUI 1200L are rendered as editable, and unchanged with respect to the first time instance, with no active users on the third user device. It should be noted that any change in the lock status or the editability of the first instance of the sample block E may not affect the lock status of the sample block A.

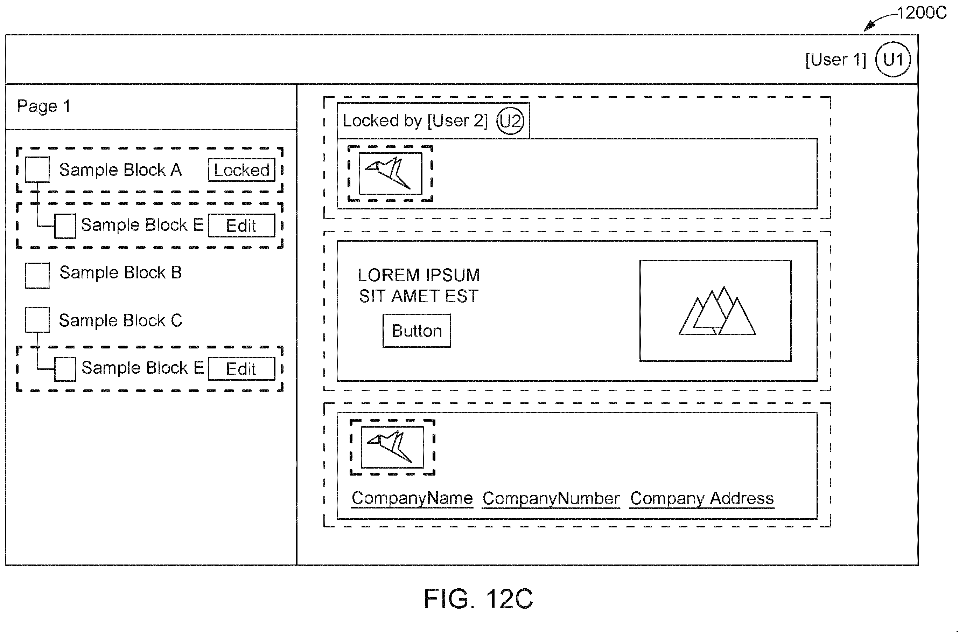

In **FIG. 12C****,** a GUI 1200C as rendered at a third time instance on the first user device associated with the user 1 is shown. In the third time instance, the user 1 may perform the user activity (i.e., replace the first image with the second image) on the one of the first instance or the second instance of the sample block E. At the third time instance, the lock status of the sample block A indicates that the sample block A is in the locked condition and the user 2 is identified as the active user of the sample block A. Therefore, the sample block A is rendered as non-editable on the first user device in the GUI 1200C. The sample block A may be rendered as not selectable on the first user device in the GUI 1200C in the side panel as well as in the content section.

It should be noted that the lock status of the first instance or the second instance of the sample block E does not affect the lock status of the sample block A. Even though the sample block E is locked by the user 1, the sample block A may be locked by the user 2. Also, the lock statuses of remaining of the blocks of the page 1 (i.e., the sample block B and the sample block C) in the GUI 1200C are unchanged. Thus, the sample block B and the sample block C in the GUI 1200C are rendered as editable, and unchanged with respect to the first time instance, with no active users on the first user device.

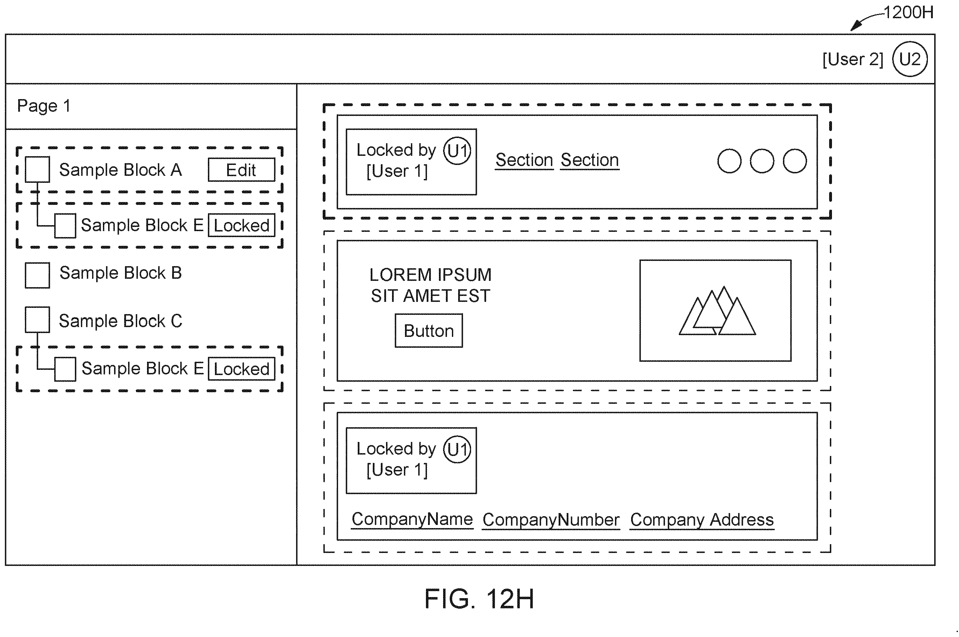

In **FIG. 12H****,** a GUI 1200H as rendered at the third time instance on the second user device associated with the user 2 is shown. In GUI 1200H, the user 2 provides a selection command to edit the sample block A in the page 1. In other words, the user 2 selects the sample block A to edit the sample block A for performing a user activity on the sample block A (such as editing, reviewing, previewing, blocking editing access of other users, etc.). Further, a locking request is generated based on the selection command. The locking request is then validated and upon successful validation, the lock status of the sample block A may be modified to indicate that the sample block A is in the locked condition. The user 2 may be identified as the active user corresponding to the sample block A. Thus, the sample block A may be rendered as editable (i.e., available for performing the user activity) on the second user device in the GUI 1200H for performing the user activity. The user 2 may perform the user activity without facing any interruption from other users (i.e., the user 1 and the user 3). By way of an example, the user 2 may edit the sample block A at the third time instance by deleting 2 sections from the 4 sections, leaving 2 sections in the modified sample block A. Thus, the sample block A of the third time instance may be modified compared to the sample block A of the second time instance (or the sample block A of the first time instance).

Also, as described above, at the third time instance, the lock status of the sample block E indicates that the sample block E is in the locked condition and the user 1 is identified as the active user of the sample block E. Therefore, the first instance and the second instance of the sample block E are rendered as non-editable on the second user device in the GUI 1200H. The sample block E may be rendered as not selectable on the second user device in the GUI 1200H in the side panel as well as in the content section. The remaining of the blocks of the page 1 (i.e., the sample block B and the sample block C) in the GUI 1200H are rendered as editable, and unchanged with respect to the first time instance, with no active users on the second user device.

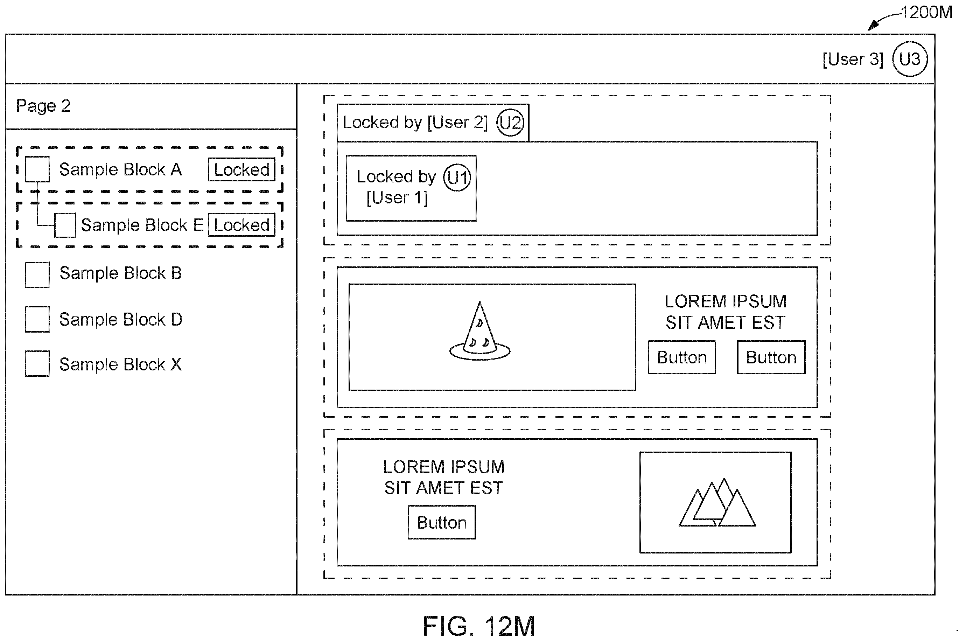

In **FIG. 12M****,** a GUI 1200M as rendered at the third time instance on the third user device associated with the user 3 is shown. As described above, at the second time instance, the lock statuses of the sample block A and the sample block E indicate that the sample block A and the sample block E are in the locked condition, and the user 1 and the user 2 are identified as the active users of the sample block A and the sample block E, respectively. Therefore, the sample block A and the sample block E are rendered as non-editable on the third user device in the GUI 1200M.

The sample block A and the sample block E may be rendered as not selectable on the third user device in the GUI 1200M in the side panel as well as in the content section. Also, the lock statuses of remaining of the blocks of the page 2 (i.e., the sample block B, the sample block D, and the sample block X) in the GUI 1200M are unchanged. Thus, the remaining of the blocks (i.e., the sample block B, the sample block D, and the sample block X) of the page 2 in the GUI 1200M are rendered as editable, and unchanged with respect to the first time instance, with no active users on the third user device.

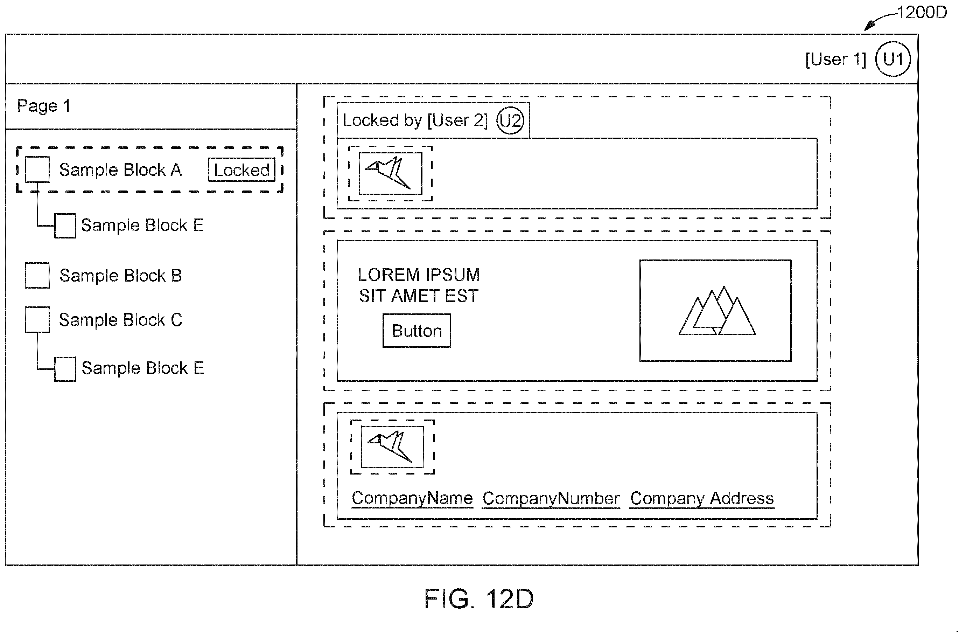

In **FIG. 12D****,** a GUI 1200D as rendered at a fourth time instance on the first user device associated with the user 1 is shown. The user 1, upon performing the user activity (i.e., replacing the first image with the second image) on the one of the first instance or the second instance of the sample block E, may unselect the sample block E and the user 1 may be classified as an inactive user for the sample block E. Alternatively, if an engagement of the user 1 with the one of the first instance or the second instance of the sample block E is not detected for a first predefined expiration time period, the user 1 may be classified as an inactive user for the sample block E. In both cases, the lock status of the sample block E may be modified to indicate that the sample block E is in an unlocked condition. Thus, both the first instance and the second instance of the sample block E may be rendered as editable with no active users on the first user device in the GUI 1200D. Also, the sample block E of the fourth time instance in GUI 1200D may be same as the sample block E of the second time instance or the sample block E of the third time instance (i.e., in the GUI 1200B or the GUI 1200C), and may be modified compared to the sample block E of the first time instance (i.e., in the GUI 1200A).

Further, at the fourth time instance, the lock status of the sample block A indicates that the sample block A is in the locked condition and the user 2 is identified as the active user of the sample block A. Therefore, the sample block A is rendered as non-editable on the first user device in the GUI 1200D. The sample block A may be rendered as not selectable on the first user device in the GUI 1200D in the side panel as well as in the content section.

Also, the lock statuses of remaining of the blocks of the page 1 (i.e., the sample block B and the sample block C) in the GUI 1200D are unchanged. Thus, the sample block B and the sample block C in the GUI 1200D are rendered as editable, and unchanged with respect to the first time instance, with no active users on the first user device.

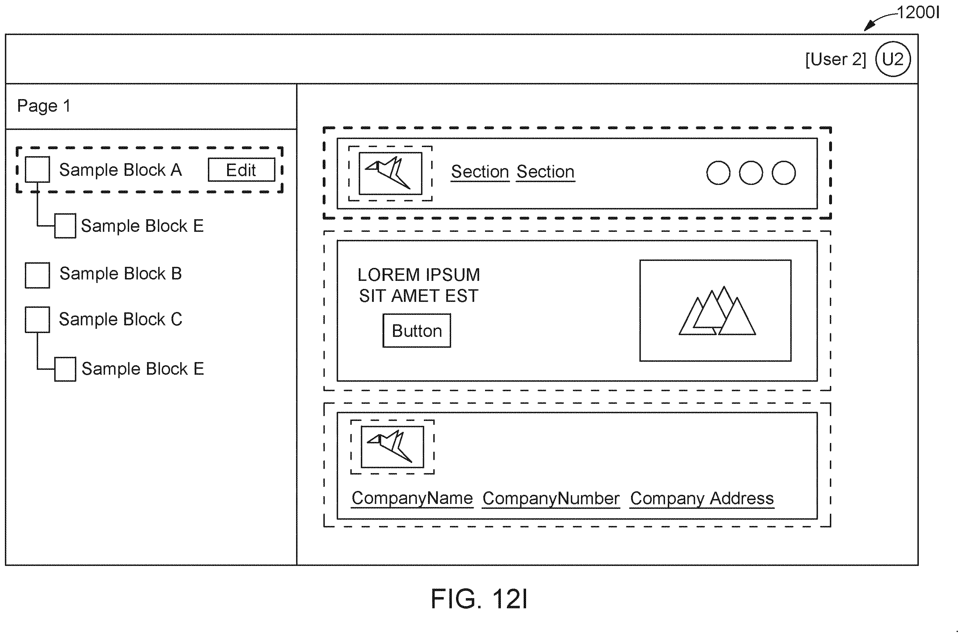

In **FIG. 12I****,** a GUI 1200I as rendered at the fourth time instance on the second user device associated with the user 2 is shown. In the fourth time instance, the user 2 may edit the sample block A. The lock status of the sample block A in the fourth time instance indicates that the sample block A is in the locked condition. As described above, both the first instance and the second instance of the modified sample block E (including the second image) may be rendered as editable with no active users on the second user device in the GUI 1200I. Also, the lock statuses of remaining of the blocks of the page 1 (i.e., the sample block B and the sample block C) in the GUI 1200I are unchanged. Thus, the sample block B and the sample block C in the GUI 1200I are rendered as editable, and unchanged with respect to the first time instance, with no active users on the second user device.

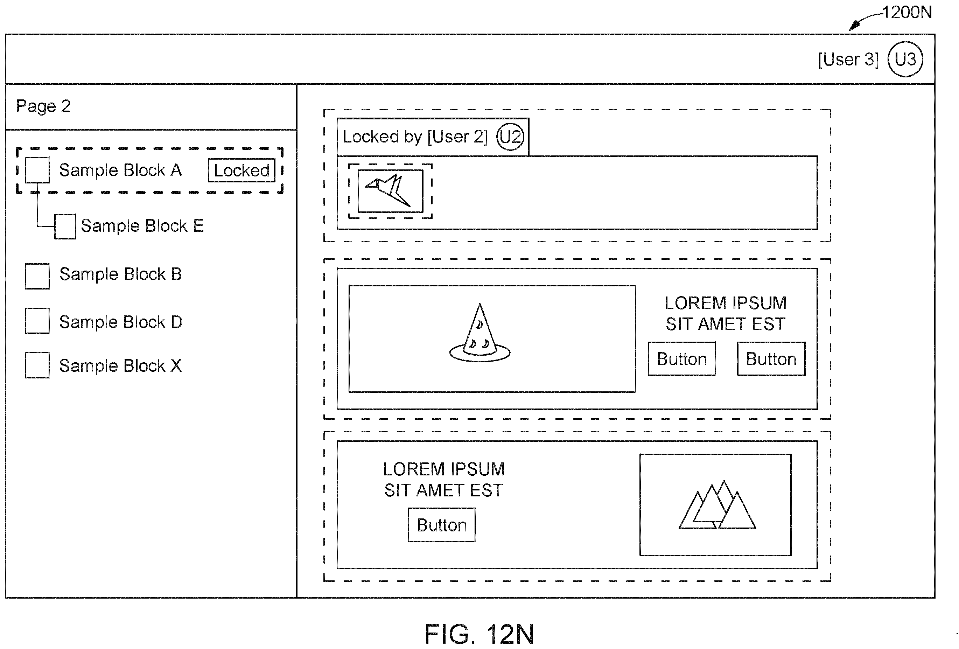

In **FIG. 12N****,** a GUI 1200N as rendered at the fourth time instance on the third user device associated with the user 3 is shown. The lock status of the sample block A indicates that the sample block A is in the locked condition and the user 2 is identified as the active user of the sample block A. Therefore, the sample block A is rendered as non-editable and non-selectable on the third user device in the GUI 1200N. Upon modification of the lock statuses of the sample block E to indicate that the sample block E is in an unlocked condition, the sample block E, along with the sample block B, the sample block D, and the sample block X, of the page 2 are rendered as editable with no active users on the third user device.

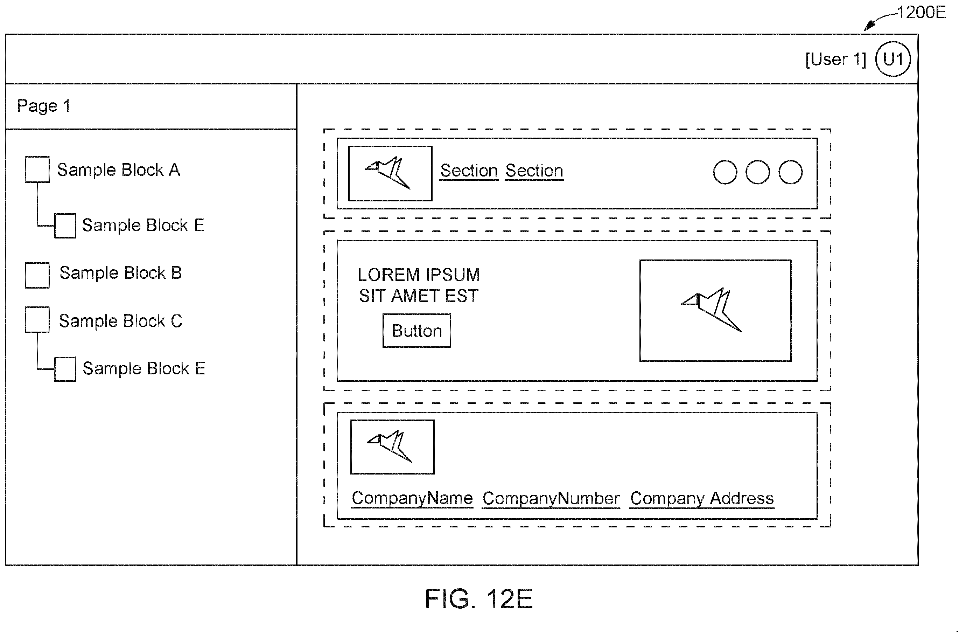

In **FIG. 12E****,** a GUI 1200E as rendered at the fifth time instance on the first user device associated with the user 1 is shown. Upon modification of the lock status of the sample block A to indicate that the sample block A is in the unlocked condition, each of the blocks of the page 1 is rendered as editable with no active users on the first user device. The sample block A is modified with respect to the second time instance and includes 2 sections. The sample block E is modified with respect to the first time instance and includes the second image. Remaining of the blocks are unchanged with respect to the first time instance.

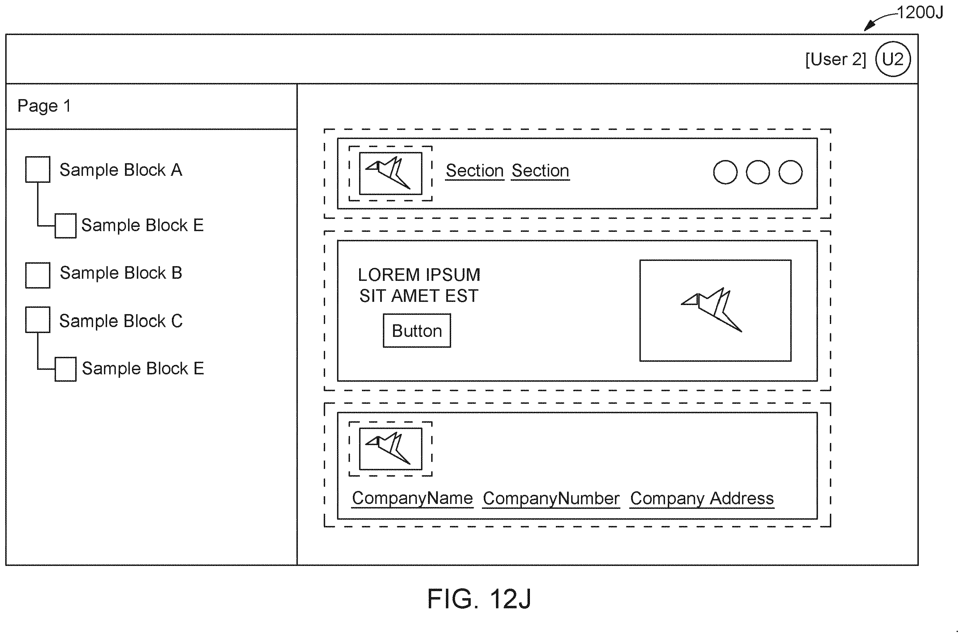

In **FIG. 12J****,** a GUI 1200J as rendered at a fifth time instance on the second user device associated with the user 2 is shown. The user 2, upon performing the user activity on the sample block A, may unselect the sample block A and the user 2 may be classified as an inactive user for the sample block A. Alternatively, if an engagement of the user 2 with the sample block A is not detected for a first predefined expiration time period, the user 2 may be classified as the inactive user for the sample block A. In both cases, the lock status of the sample block A may be modified to indicate that the sample block A is in the unlocked condition. Thus, the sample block A may be rendered as editable at the fifth time instance with no active users on the second user device. The sample block A is modified with respect to the second time instance and includes 2 sections. The sample block E is modified with respect to the first time instance and includes the second image. Remaining of the blocks are unchanged with respect to the first time instance.

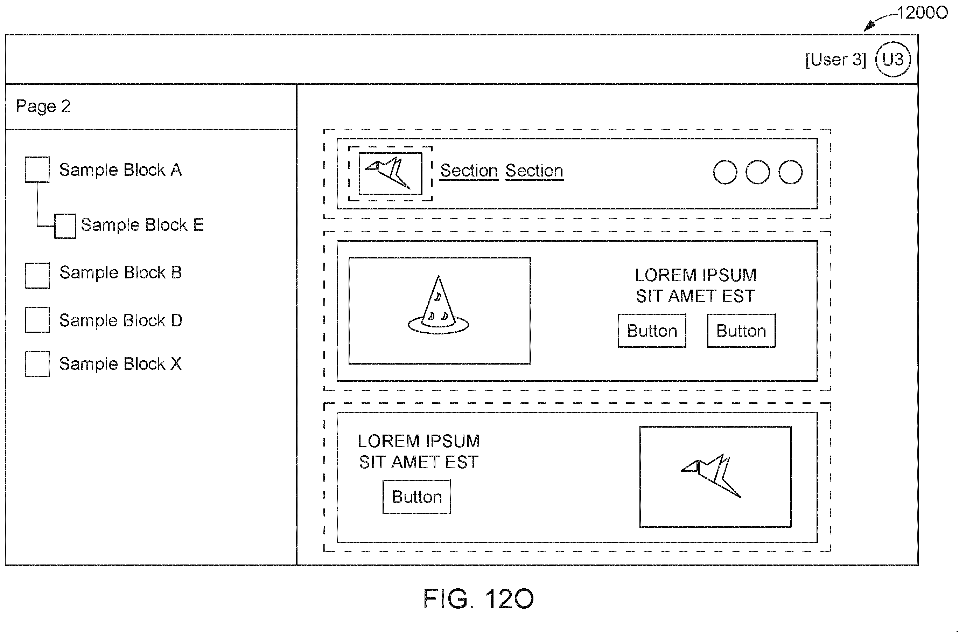

In FIG. 12O, a GUI 12000 as rendered at the fifth time instance on the third user device associated with the user 3 is shown. Upon modification of the lock status of the sample block A to indicate that the sample block A is in the unlocked condition, each of the blocks of the page 2 is rendered as editable with no active users on the third user device. The sample block A is modified with respect to the second time instance and includes 2 sections. The sample block E is modified with respect to the first time instance and includes the second image. Remaining of the blocks are unchanged with respect to the first time instance.

Thus, multiple users can edit different blocks (which may be present at multiple pages of an application and may be nested within other blocks) at the same time instance. While editing the respective blocks, the users may not face a problem of overwriting or interruption by other concurrently active users on any of the multiple pages, even if a user is editing a first block that is nested within a second block being edited by another user. Also, the users editing the blocks may not restrict other users from editing other blocks at the same time instance.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

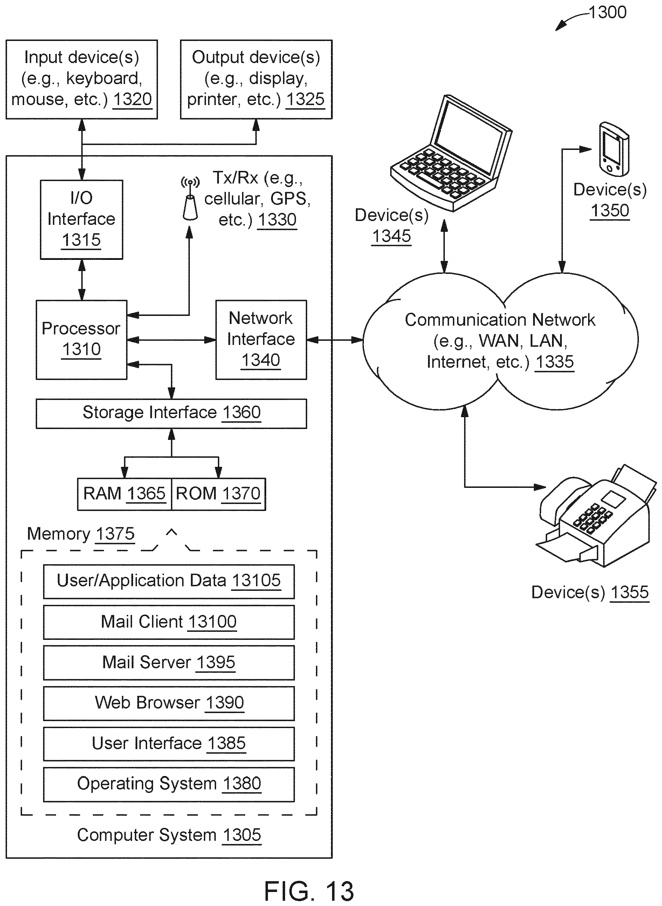

The disclosed methods and systems may be implemented on a conventional or a general-purpose computer system, such as a personal computer (PC) or server computer. **FIG. 13** is a block diagram that illustrates a system architecture 1300 of a computer system 1305 for managing co-development of applications, in accordance with an exemplary embodiment of the present disclosure. Variations of computer system 1305 may be used for implementing the server 105 for calculation of test automation feasibility indices. The computer system 1305 may include a central processing unit ("CPU" or "processor") 1310. The processor 1310 may include at least one data processor for executing program components for executing user-generated or system-generated requests. A user may include a person, a person using a device such as such as those included in this disclosure, or such a device itself. The processor 1310 may include specialized processing units such as integrated system (bus) controllers, memory management control units, floating point units, graphics processing units, digital signal processing units, etc. The processor 1310 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 1310 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

The processor 1310 may be disposed in communication with one or more input/output (I/O) devices via an I/O interface 1315. The I/O interface 1315 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 1315, the computer system 1305 may communicate with one or more I/O devices. For example, the input device 1320 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 1325 may be a printer, fax machine, video display (e.g., cathode ray tube (CRT), liquid crystal display (LCD), light-emitting diode (LED), plasma, or the like), audio speaker, etc. In some embodiments, a transceiver 1330 may be disposed in connection with the processor 1310. The transceiver 1330 may facilitate various types of wireless transmission or reception. For example, the transceiver 1330 may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 1310 may be disposed in communication with a communication network 1335 via a network interface 1340. The network interface 1340 may communicate with the communication network 1335. The network interface 1340 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 1335 may include, without limitation, a direct interconnection, local area network (LAN), wide area network (WAN), wireless network (e.g., using Wireless Application Protocol), the Internet, etc. Using the network interface 1340 and the communication network 1335, the computer system 1305 may communicate with devices 1325, 1345, 1350, and 1355. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 1305 may itself embody one or more of these devices.

In some embodiments, the processor 1310 may be disposed in communication with one or more memory devices 1375 (e.g., RAM 1365, ROM 1370, etc.) via a storage interface 1360. The storage interface 1360 may connect to the one or more memory devices 1375 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 1375 may store a collection of program or database components, including, without limitation, an operating system 1380, user interface 1385, web browser 1390, mail server 1395, mail client 13100, user/application data 13105 (e.g., any data variables or data records discussed in this disclosure), etc. The operating system 1380 may facilitate resource management and operation of the computer system 1305. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8/l0/11, etc.), APPLE^{®} IOS^{®}, GOOGLE^{®} ANDROID^{®}, BLACKBERRY^{®} OS, or the like. The user interface 1385 may facilitate display, execution, interaction, manipulation, or operation of program components through textual or graphical facilities. For example, user interfaces may provide computer interaction interface elements on a display system operatively connected to the computer system 1305, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO°, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 1305 may implement a web browser 1390 stored program component. The web browser 1390 may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 1305 may implement a mail server 1395 stored program component. The mail server 1395 may be an Internet mail server such as MICROSOFT^{®} EXCHANGE^{®}, or the like. The mail server 1395 may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server 1119 may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 1305 may implement a mail client 13100 stored program component. The mail client 13100 may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, the computer system 1305 may store the user/application data 13105, such as the data, variables, records, etc. (e.g., lock data set of user privileges, and so forth) as described in this disclosure. Such data may be implemented as fault-tolerant, relational, scalable, secure databases such as ORACLE^{®} OR SYBASE^{®} OR POSTGRESQL^{®} OR any such similar data. Alternatively, such data may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such data may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of managing co-development of applications. The method and system retrieve lock data of each of the plurality of blocks and a first set of user privileges associated with the first user. The lock data of each block includes a lock status. The lock status is indicative of whether a corresponding block is in a locked condition or an unlocked condition. The method and system determine editability by the first user of each of the plurality of blocks based on the lock data of the plurality of blocks and the first set of user privileges. This allows the disclosed method and system to efficiently synchronize co-development of applications where multiple users are operating on a plurality of blocks in a GUI of the development environment. In applications which include thousands or millions of pages, the step of storing lock data for each block and retrieving the lock data within the context of each user helps in keeping track of active users and user changes for each block. Further, the step of determining editability of the user to each of the plurality of blocks ensures that a user does not overwrite changes made by another user when both the users are editing the GUI concurrently. Each of the plurality of blocks is nestable within one or more of remaining of the plurality of blocks. When a nested block is in the locked condition, the lock status of associated parent blocks remains unchanged. The method and system allow one user to edit a nested block and another user to edit a parent block at the same time instance, without facing any problem of overwriting by each other.

As will be appreciated by those skilled in the art, the techniques described in the various embodiments discussed above are not routine, or conventional, or well understood in the art. The techniques discussed above provide for managing co-development of applications. The techniques synchronize co-development experience for a plurality of users through locking and unlocking of blocks. The techniques manage editability of a user in real-time to each of a plurality of blocks so that two users do not end up editing the same block at the same time. The techniques monitor user activity in real-time and ensure that a block is not locked by inactive users by setting an expiration time to edit each of the plurality of blocks.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for managing co-development of applications. The illustrated steps are set out to explain the exemplary embodiments shown, and it should be anticipated that ongoing technological development may change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for managing co-development of applications, the method comprising:
receiving, by a server, a request corresponding to a first user to edit a Graphical User Interface (GUI) of a development environment for an application, wherein the application comprises a plurality of pages, and wherein the plurality of pages comprises a plurality of blocks;
retrieving, by the server, lock data of each of the plurality of blocks and a first set of user privileges associated with the first user, wherein the lock data of each block comprises a lock status, and wherein the lock status is indicative of whether a corresponding block is in a locked condition or an unlocked condition;
determining, by the server, editability of the first user to each of the plurality of blocks based on the lock data of each of the plurality of blocks and the first set of user privileges; and
rendering, by the server, the GUI on a first user device associated with the first user, based on the editability.

2. The method of claim 1, wherein the editability is indicative of whether each block of the plurality of blocks is editable by the first user or non-editable by the first user.

3. The method of claim 1, wherein the lock data of each block further comprises block activity data, and wherein the block activity data is indicative of a set of users editing one or more blocks of the plurality of blocks.

4. The method of claim 1, further comprising:
receiving, by the server from the first user device associated with the first user, a selection command to edit a first block of the plurality of blocks in a first page of the plurality of pages, wherein a lock status of the first block is indicative of the first block being in the unlocked condition; and
generating, by the server, a locking request for the first block based on the selection command.

5. The method of claim 4, further comprising:
validating, by the server, the locking request through an Application Programming Interface (API); and
upon successfully validating,
modifying, by the server, the lock status of the first block to indicate that the first block is in the locked condition;
identifying, by the server, the first user as an active user corresponding to the first block with the modified lock status; and
rendering, by the server, the first block as editable by the first user device associated with the first user.

6. The method of claim 5, further comprising rendering, by the server, the first block as non-editable by a second user device associated with a second user, wherein the first user and the second user are concurrently editing the development environment.

7. The method of claim 5, further comprising:
detecting, by the server, an engagement of the first user with the first block; and
classifying, by the server, the first user as one of an active user or an inactive user of the first block based on the detected engagement.

8. The method of claim 7, wherein detecting the engagement of the first user with the first block is based on ping messages received from the first user device, and wherein the method further comprises:
initiating, by the server, a timer based on the engagement of the first user, wherein the timer comprises a first predefined expiration time period;
identifying, by the server, the first user as the active user corresponding to the first block when at least one ping message is received within the first predefined expiration time period; and
identifying, by the server, the first user as the inactive user corresponding to the first block when at least one ping message is not received within the first predefined expiration time period.

9. The method of claim 7, further comprising:
when the first user is classified as the inactive user corresponding to the first block, sending, by the server on the first user device, a first notification indicating an expiration of the first predefined expiration time period.

10. The method of claim 9, further comprising:
receiving, by the server from the first user device, a response to the first notification within a second predefined expiration time period;
in response to receiving the response to the first notification from the first user device associated with the first user, identifying, by the server, the first user as the active user; and
maintaining, by the server, the lock status of the first block to indicate that the first block is in the locked condition after receiving the response to the first notification within the second predefined expiration time period.

11. The method of claim 9, further comprising:
modifying, by the server, the lock status of the first block to indicate that the first block is in the unlocked condition when a response to the first notification from the first user device is not received within a second predefined expiration time period.

12. The method of claim 1, wherein each of the plurality of blocks is nestable within one or more of remaining of the plurality of blocks.

13. The method of claim 6, wherein the first block is comprised in a second page of the plurality of pages, the method further comprising:
rendering, by the server, the first block in the first page and in the second page as editable by the first user device associated with the first user; and
rendering, by the server, the first block in the first page and in the second page as non-editable by the second user device associated with the second user.

14. A system for managing co-development of applications, the system comprising:
a processing circuitry; and
a memory communicatively coupled to the processing circuitry, wherein the memory stores processor instructions, which when executed by the processing circuitry, cause the processing circuitry to perform the steps of the method according to any one of claims 1 to 13.
